# EUROPEAN PATENT APPLICATION

(11) **EP 4 509 951 A1**
(43) Date of publication of application: **19.02.2025**
(21) Application number: 24745616.3
(22) Date of filing: 24.06.2024
(51) Int. Cl.: G06F 1/16, G02B 1/12, C09J 9/00

(54) **ELECTRONIC DEVICE INCLUDING PROTECTIVE FILM**

(30) Priority: 30.06.2023 KR 20230085206; 25.07.2023 KR 20230096700
(71) Applicant: Samsung Electronics Co., Ltd., Suwon-si, Gyeonggi-do 16677 (KR)
(72) Inventor: JUNG, Jihyung, Suwon-si, Gyeonggi-do 16677 (KR); AHN, Sungho, Suwon-si, Gyeonggi-do 16677 (KR); LEE, Wonho, Suwon-si, Gyeonggi-do 16677 (KR); JANG, Seokmin, Suwon-si, Gyeonggi-do 16677 (KR); LEE, Soyoung, Suwon-si, Gyeonggi-do 16677 (KR)
(74) Representative: Gulde & Partner
(86) International application number: PCT/KR2024/008714
(87) International publication number: WO 2025/005609

(57) **Abstract**

An electronic device according to an embodiment of the disclosure may include a first housing, a second housing movably coupled with respect to the first housing, a flexible display which is disposed in the first housing and the second housing and includes an inner region having at least a part moving in an inner space of the electronic device, based on the movement of the second housing with respect to the first housing, a support bar including a first support part configured to support the end of the flexible display, which is positioned in the inner space of the electronic device, and a second support part which extends from the first support part and is adjacent to the end of the flexible display, and a protective film including a first attachment region bonded to the flexible display and a second attachment region which extends from the first attachment region and has at least a part facing the second support part.

## Description

### [Technical Field]

Embodiments disclosed herein relate to an electronic device including a protective film.

### [Background Art]

Displays may be in charge of essential functions of portable electronic devices. Displays may visually display information. Factors such as the design, size, and quality of displays may be crucial to consumers' choice of electronic devices.

Recent development of display technologies has made flexible displays commercially available. Such flexible displays may be used to implement displays configured such that the screen size thereof can be varied. For example, electronic devices including a display, the screen size of which increases/decreases through sliding, or which is configured to roll with regard to a specific mechanical element, are being developed. As an example, an electronic device may have a structure (for example, a rollable structure or a slidable structure) in which the display area of a flexible display can be varied through support of housings configured to slide with regard to each other.

### [Disclosure of Invention]

### [Technical Problem]

A rollable electronic device may include multiple housings configured to move relative to each other as a result of slide-in or slide-out movements. The flexible display may be disposed across the multiple housings such that the display area is reduced or expanded according to sliding movements of the multiple housings. For example, the flexible display may include a planar portion which is always visible from the outside, and a bending portion which extends from the planar portion, and at least a part of which is bent and moved into the inner space of the electronic device so as not to be visible from the outside in a slide-in state. The bending portion may be in a partially bent state in a slide-in or slide-out state. In addition, the bending portion may be moved out of the inner space of the electronic device in a slide-out state and may thus constitute substantially the same plane with the planar portion.

A protective film may be attached to the outermost layer of the flexible display. The protective film may be provided in a replaceable type, and a part thereof may be bent together with the bending portion of the flexible display and moved into the inner space of the electronic device.

Meanwhile, the outermost layer of the flexible display may be made of glass and/or coating surface. In this case, the degree of attachment of the protective film to the flexible display may be insufficient, and the protective film may thus detach from the flexible display. The protective film is configured to be replaceable from the flexible display, thus the protective film cannot be fixedly coupled to the flexible display, which makes the protective film possible to detach from the flexible display.

An embodiment of the disclosure may provide a structure for alleviating or reducing detachment of the protective film from the flexible display.

### [Solution to Problem]

An electronic device according to an embodiment of the disclosure includes a first housing, a second housing movably coupled with respect to the first housing, a flexible display which is disposed in the first housing and the second housing and includes an inner region having at least a part moving in an inner space of the electronic device, based on the movement of the second housing with respect to the first housing, a support bar including a first support part configured to support the end of the flexible display, which is positioned in the inner space of the electronic device, and a second support part which extends from the first support part and is adjacent to the end of the flexible display, and a protective film including a first attachment region bonded to the flexible display and a second attachment region which extends from the first attachment region and has at least a part facing the second support part.

### [Advantageous Effects of Invention]

According to an embodiment of the disclosure, a part of a protective film may be attached to an element having surface roughness higher than the outermost layer of a flexible display, so as to reduce or alleviate the phenomenon that the protective film may peel off from the flexible display. In an embodiment, the protective film may be formed to be longer than the flexible display in the sliding direction of an electronic device. In this case, the end of the protective film may be spaced apart from the end of the flexible display, which is positioned inside the electronic device. The end of the protective film may be spaced apart from the end of the flexible display in an inner space of the electronic device and be attached to an element having surface roughness higher than the outermost layer of the flexible display. As a result, the phenomenon that the protective film may be peeled off from the flexible display can be alleviated or reduced.

### [Brief Description of Drawings]

In connection with the description of the drawings, same or similar reference numerals will be used to refer to same or similar elements.
FIG. 1 is a block diagram of an electronic device in a network environment according to an embodiment of the disclosure.
FIG. 2A and FIG. 2B are views showing the front surface and the rear surface of an electronic device in a slide-in state according to an embodiment of the disclosure.
FIG. 3A and FIG. 3B are views showing the front surface and the rear surface of an electronic device in a slide-out state according to an embodiment of the disclosure.
FIG. 4 is an exploded perspective view of an electronic device according to an embodiment of the disclosure.
FIG. 5A is a cross-sectional view of the electronic device seen along line 5a-5a in FIG. 2A according to an embodiment of the disclosure.
FIG. 5B is a cross-sectional view of an electronic device in an intermediate state according to an embodiment of the disclosure.
FIG. 5C is a cross-sectional view of the electronic device seen along line 5c-5c in FIG. 3A according to an embodiment of the disclosure.
FIG. 6 is an exploded perspective view of a protective film and a flexible display according to an embodiment of the disclosure.
FIG. 7A is a view showing a coupling state of a flexible display, in which a protective film is attached to a support bracket in case that an electronic device is in a slide-in state.
FIG. 7B is an exploded perspective view showing a configuration of the electronic device illustrated in FIG. 7A.
FIG. 8A is a cross-sectional view showing the state cut along line P1-P1 in FIG. 2A according to an embodiment of the disclosure.
FIG. 8B is a cross-sectional view showing the state cut along line P2-P2 in FIG. 3A according to an embodiment of the disclosure.
FIG. 9A is a view showing a state in which a second attachment region of a protective film is bonded to a fixation plate disposed on a second support part of a support bar according to an embodiment of the disclosure.
FIG. 9B and FIG. 9C are views showing a state in which a fixation plate for fixing a drive belt is disposed between the second support part of the support bar and the second attachment region of the protective film illustrated in FIG. 8A and FIG. 8B.
FIG. 10A to FIG. 10F are views showing various embodiments of a coupling relationship between a fixation plate and a second support part of a support bar according to an embodiment of the disclosure.
FIG. 11A and FIG. 11B are views showing a state in which a lattice plate including a mesh structure is disposed between the fixation plate and the second attachment region of the protective film illustrated in FIG. 9A to FIG. 9C.
FIG. 12A and FIG. 12B are views showing a state in which a fixation plate is slidably coupled to a second support part of a support bar according to an embodiment of the disclosure.
FIG. 12C is a view showing a connection relationship between the fixation plate and the second support part in FIG. 12A.
FIG. 12D and FIG. 12E are views showing a state in which a bearing ball is disposed between a second support part of a support bar and a fixation plate according to an embodiment of the disclosure.
FIG. 13 is a view showing a state in which a region of a protective film, which is easily peeled off from the flexible display, has been removed according to an embodiment of the disclosure.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

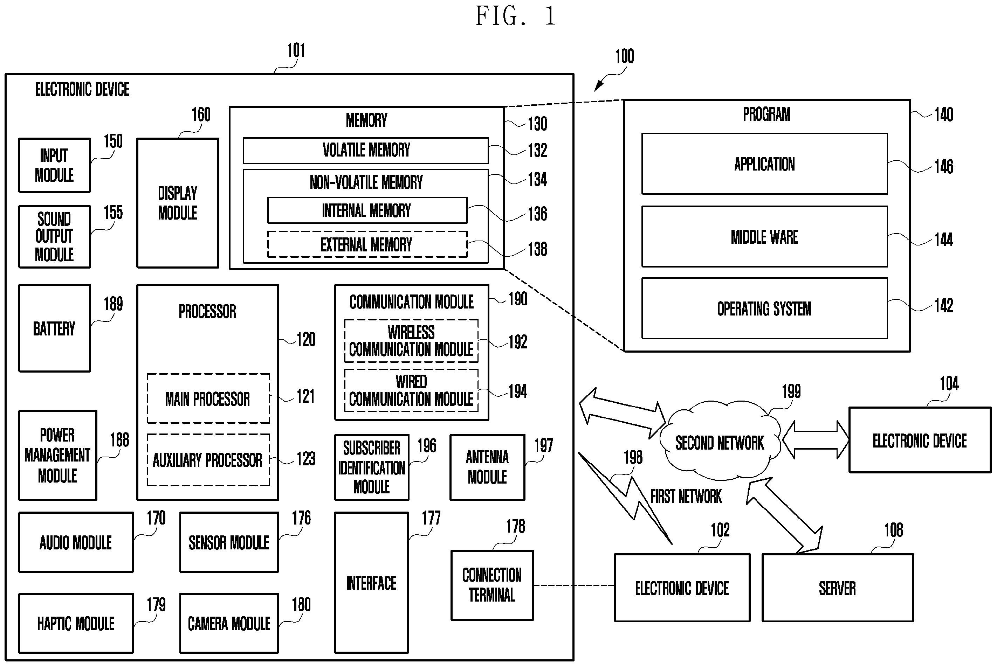

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

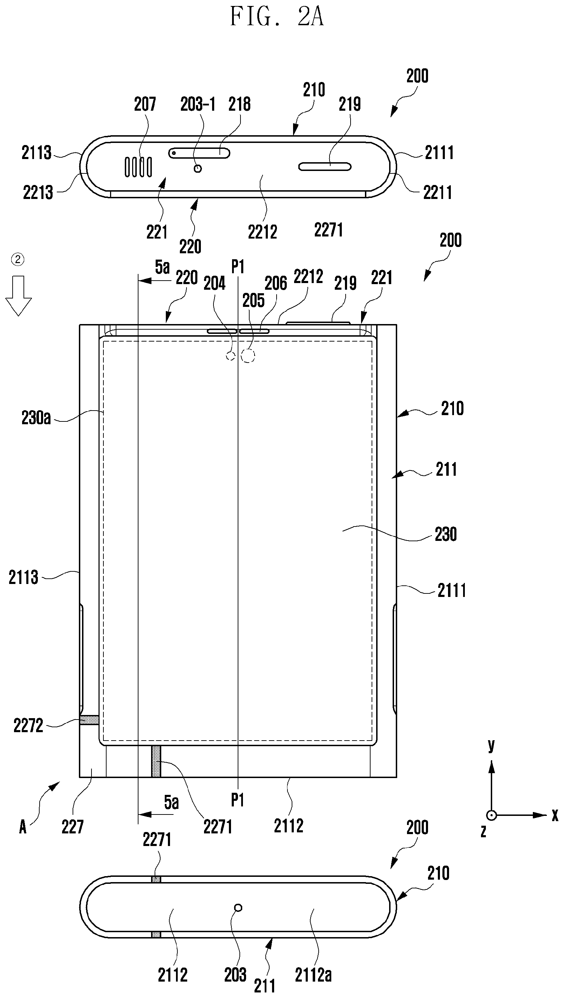

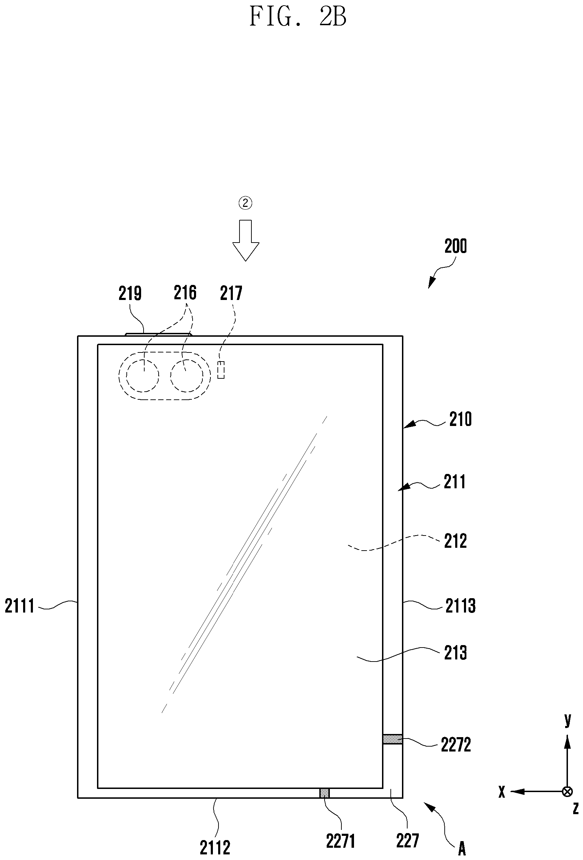

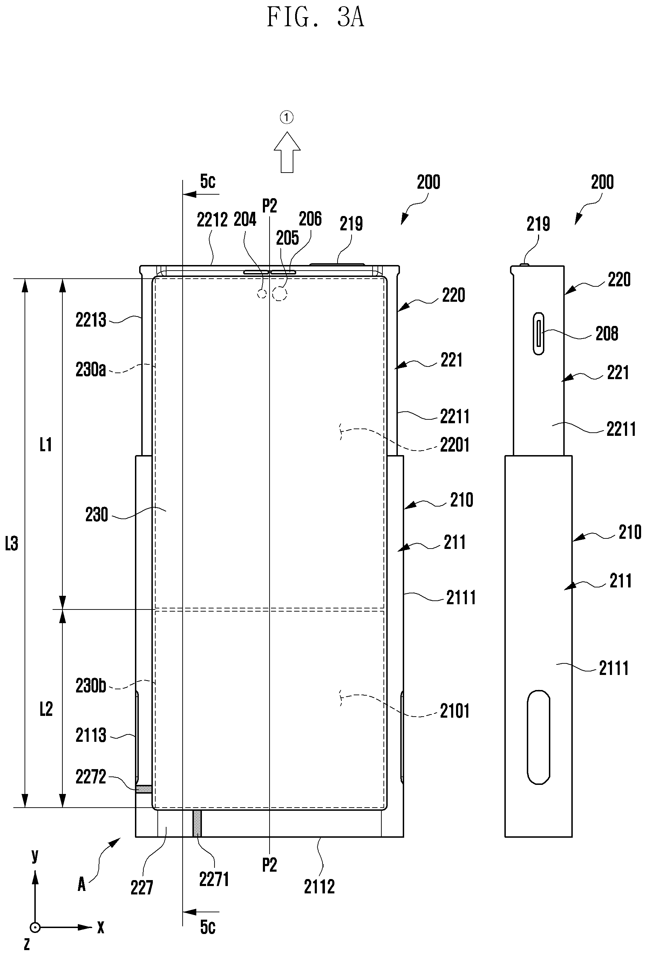

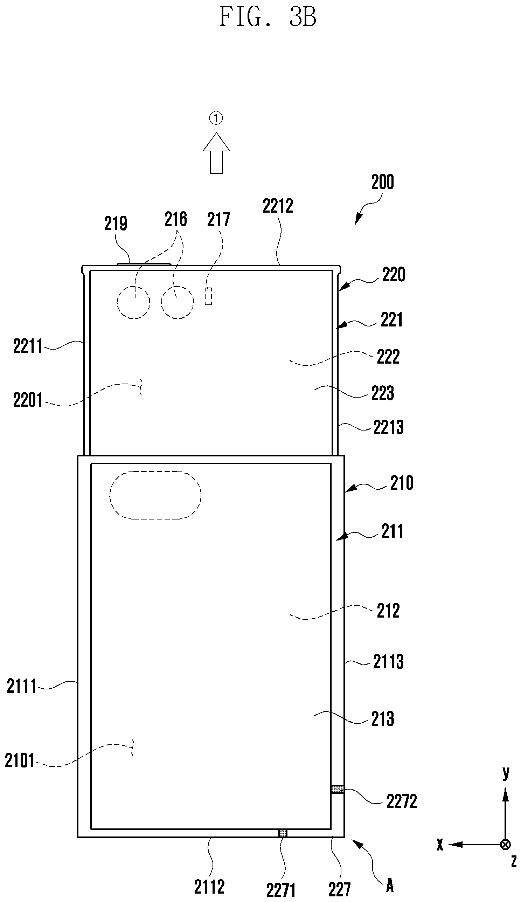

FIG. 2A and FIG. 2B are views showing the front surface and the rear surface of an electronic device in a slide-in state according to an embodiment of the disclosure. FIG. 3A and FIG. 3B are views showing the front surface and the rear surface of an electronic device in a slide-out state according to an embodiment of the disclosure.

An electronic device 200 in FIG. 2A to FIG. 3B may be at least partially similar to the electronic device 101 in FIG. 1, or may further include other embodiments of the electronic device.

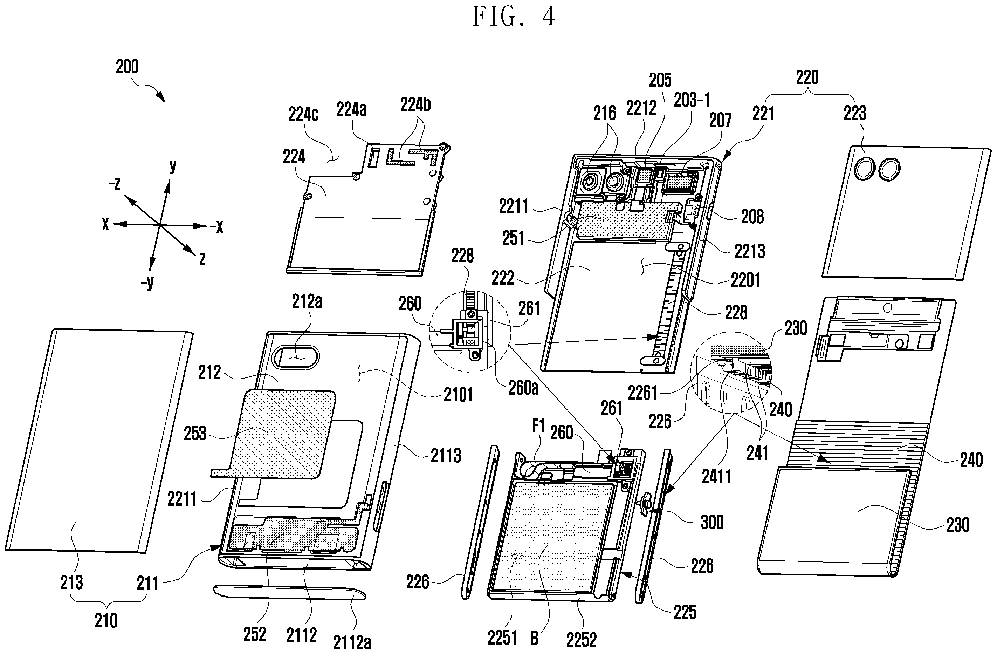

Referring to FIG. 2A to FIG. 3B, the electronic device 200 may include a first housing 210, a second housing 220 slidably coupled to the first housing 210 in a designated direction (e.g., the direction ① or the direction ②) (e.g., the ±Y-axis direction), and a flexible display 230 (e.g., a rollable display, an expandable display, or a stretchable display) disposed to be supported by at least a part of the first housing 210 and the second housing 220. In an embodiment, the second housing 220 may be slidably coupled to the first housing 210 to be withdrawn in a first direction (the direction ①) or inserted in a second direction (the direction ②) opposite to the first direction (the direction ①), with reference to the first housing 210. At least a part of the second housing 220 may be accommodated in at least a part of a first space 2101 formed in the first housing 210, and thus the electronic device 200 may be changed to a slide-in state (e.g., an insertion state). In an embodiment, at least a part of the second housing 220 may be moved from the first space 2101 in an outer direction (e.g., the direction ①), and thus the electronic device 200 may be changed to a slide-out state (e.g., a withdrawal state). **In** an embodiment, the electronic device 200 may include a support member (e.g., the support member 240 in FIG. 4) (e.g., a bendable member, a bendable support member, a multi-joint hinge module, or a multi-bar assembly) which at least partially forms the same plane as at least a part of the second housing 220 in a slide-out state, and is at least partially accommodated in the first space 2101 of the first housing 210 in a bending manner, in a slide-in state. In an embodiment, at least a part of the flexible display 230 may be disposed to at least a part of the second housing 220 in an attachment manner. In an embodiment, at least a part of the other portions of the flexible display 230 may be attached to a support member 240 (e.g., the support member 240 in FIG. 4). At least a part of the flexible display 230 may be accommodated in the first space 2101 of the first housing 210 in a bending manner while being supported by a support member (e.g., the support member 240 in FIG. 4) in a slide-in state, and thus be disposed to be invisible from the outside. In an embodiment, in a slide-out state, at least a part of the flexible display 230 may be disposed to be visible from the outside while being supported by a support member (e.g., the support member 240 in FIG. 4) at least partially forming the same plane as the second housing 220.

According to an embodiment, the electronic device 200 may include the first housing 210 including a first side member 211 and the second housing 220 including a second side member 221. In an embodiment, the first side member 211 may include a first side surface 2111 having a first length along the first direction (e.g., the Y-axis direction), a second side surface 2112 extending along a direction (e.g., the X-axis direction) substantially perpendicular to the first direction from the first side surface 2111 to have a second length shorter than the first length, and a third side surface 2113 which extends substantially parallel to the first side surface 2111 from the second side surface 2112 and has the first length. In an embodiment, the first side member 211 may be at least partially formed of a conductive member (e.g., metal). In some embodiments, the first side member 211 may be formed of a combination of a conductive member and a non-conductive member (e.g., polymer). In an embodiment, the first housing 210 may include a first extension member 212 extending from at least a part of the first side member 211 to at least a part of the first space 2101. In an embodiment, the first extension member 212 may be formed integrally with the first side member 211. In some embodiments, the first extension member 212 may also be formed separately from the first side member 211 and be structurally coupled to the first side member 211.

According to an embodiment, the second side member 221 may include a fourth side surface 2211 which at least partially corresponds to the first side surface 2111 and has a third length, a fifth side surface 2212 which extends in a direction substantially parallel to the second side surface 2112 from the fourth side surface 2211 and has a fourth length shorter than the third length, and a sixth side surface 2213 which extends to correspond to the third side surface 2113 from the fifth side surface 2212 and has the third length. In an embodiment, the second side member 221 may be at least partially formed of a conductive member (e.g., metal). In some embodiments, the second side member 221 may be formed of a combination of a conductive member and a non-conductive member (e.g., polymer). In an embodiment, at least a part of the second side member 221 may include a second extension member 222 extending to at least a part of a second space 2201 of the second housing 220. In an embodiment, the second extension member 222 may be formed integrally with the second side member 221. In some embodiments, the second extension member 222 may also be formed separately from the second side member 221 and be structurally coupled to the second side member 221.

According to an embodiment, the first side surface 2111 and the fourth side surface 2211 may be slidably coupled to each other. In an embodiment, the third side surface 2113 and the sixth side surface 2213 may be slidably coupled to each other. In an embodiment, in a slide-in state, the fourth side surface 2211 may overlap the first side surface 2111 and thus be disposed to be substantially invisible from the outside. In an embodiment, in a slide-in state, the sixth side surface 2213 may overlap the third side surface 2113 and thus be disposed to be substantially invisible from the outside. In some embodiments, at least a part of the fourth side surface 2211 and the sixth side surface 2213 may also be disposed to be at least partially visible from the outside in a slide-in state. In an embodiment, in a slide-in state, the second extension member 222 may overlap the first extension member 212 and thus be disposed to be substantially invisible from the outside. In some embodiments, the second extension member 222 may also be disposed to be at least partially visible from the outside in a slide-in state.

According to an embodiment, the first housing 210 may include a first rear cover 213 coupled to at least a part of the first side member 211. In an embodiment, the first rear cover 213 may be disposed in a manner of being coupled to at least a part of the first extension member 212. In some embodiments, the first rear cover 213 may also be formed integrally with the first side member 211. In an embodiment, the first rear cover 213 may be formed of polymer, coated or colored glass, ceramic, metal (e.g., aluminum, stainless steel (STS), or magnesium), or a combination of at least two among the above-materials. In some embodiments, the first rear cover 213 may also extend to at least a part of the first side member 211. In some embodiments, the first rear cover 213 may also be omitted therefrom, and at least a part of the first extension member 212 may also replace the first rear cover 213.

According to an embodiment, the second housing 220 may include a second rear cover 223 coupled to at least a part of the second side member 221. In an embodiment, the second rear cover 223 may be disposed in a manner of being coupled to at least a part of the second extension member 222. In some embodiments, the second rear cover 223 may also be formed integrally with the second side member 221. In an embodiment, the second rear cover 223 may be formed of polymer, coated or colored glass, ceramic, metal (e.g., aluminum, stainless steel (STS), or magnesium), or a combination of at least two among the above-materials. In some embodiments, the second rear cover 223 may also extend to at least a part of the second side member 221. In some embodiments, the second rear cover 223 may also be omitted therefrom, and at least a part of the second extension member 222 may also replace the second rear cover 223.

According to an embodiment, the flexible display 230 may include a first portion 230a (e.g., a flat-surface part) always visible from the outside, and a second portion 230b (e.g., a bendable part or a bending part) which extends from the first portion 230a and is accommodated in the first space 2101 of the first housing 210 in a manner of being at least partially bent so as to be invisible from the outside in a slide-in state. In an embodiment, the first portion 230a may be disposed to be supported by the second housing 220, and the second portion 230b may be disposed to be at least partially supported by a support member (e.g., the support member 240 in FIG. 4). In an embodiment, in case that the second housing 220 is in a slide-out state along the first direction (the direction ①), the second portion 230b of the flexible display 230 may form substantially the same plane as the first portion 230a while being supported by a support member (e.g., the support member 240 in FIG. 4), and be disposed to be visible from the outside. In an embodiment, in case that the second housing 220 is in a slide-in state along the second direction (the direction ②), the second portion 230b of the flexible display 230 may be accommodated in the first space 2101 of the first housing 210 in a manner of being bent, and be disposed to be invisible from the outside. Accordingly, the display area of the flexible display 230 may be variable as the second housing 220 moves in a sliding manner along a designated direction (e.g., the ±Y-axis direction) from the first housing 210.

According to an embodiment, the length of the flexible display 230 may be variable in the first direction (the direction ①) according to a sliding movement of the second housing 220 moving with reference to the first housing 210. For example, in a slide-in state, the flexible display 230 may have a first display area (e.g., a region corresponding to the first portion 230a) corresponding to a first length L1. In an embodiment, in a slide-out state, the flexible display 230 may be enlarged to have a second display area (e.g., a region including the first portion 230a and the second portion 230b) which corresponds to a third length L3 longer than the first length L1 and is larger than the first display area, according to a sliding movement of the second housing 220 additionally moved by a second length L2 with reference to the first housing 210.

According to an embodiment, the electronic device 200 may include at least one among an input device (e.g., the microphone 203-1), a sound output device (e.g., the call receiver 206 and/or the speaker 207), sensor modules 204 and 217, a camera module (e.g., the first camera module 205 or the second camera module 216), a connector port 208, a key input device 219, an indicator (not shown) arranged in the second space 2201 of the second housing 220. In an embodiment, the electronic device 200 may include another input device (e.g., the microphone 203) disposed in the first housing 210. In some embodiments, the electronic device 200 may also be configured such that at least one among the above-described elements is omitted or other elements are additionally included. In some embodiments, at least one among the above-described elements may also be disposed in the first space 2101 of the first housing 210.

According to an embodiment, the input device may include a microphone 203-1. In some embodiments, the input device (e.g., the microphone 203-1) may also include multiple microphones arranged to be able to detect the direction of sound. For example, a sound output device may include a call receiver 206 and a speaker 207. In an embodiment, the speaker 207 may correspond to the outside through at least one speaker hole formed in the second housing 220, at a position (e.g., the fifth side surface 2212) which is always exposed to the outside regardless of slide-in/slide-out states. In an embodiment, the connector port 208 may correspond to the outside through a connector port hole formed in the second housing 220 in a slide-out state. In some embodiments, the connector port 208 may also correspond to the outside through an opening formed in the first housing 210 and formed to correspond to the connector port hole, in a slide-in state. In some embodiments, the call receiver 206 may also include a speaker (e.g., a piezo speaker) which is operated without a separate speaker hole.

According to an embodiment, the sensor modules 204 and 217 may generate an electrical signal or a data value corresponding to an internal operation state of the electronic device 200 or an external environmental state. In an embodiment, for example, the sensor modules 204 and 217 may include a first sensor module 204 (e.g., a proximity sensor or an illuminance sensor) disposed on the front surface of the electronic device 200 and/or a second sensor module 217 (e.g., a heart rate monitoring (HRM) sensor) disposed on the rear surface of the electronic device 200. In an embodiment, the first sensor module 204 may be disposed below the flexible display 230 on the front surface of the electronic device 200. In an embodiment, the first sensor module 204 and/or the second sensor module 217 may include at least one among a proximity sensor, an illuminance sensor 204, a time of flight (TOF) sensor, an ultrasonic sensor, a fingerprint recognition sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, or a humidity sensor.

According to an embodiment, the camera module may include a first camera module 205 disposed on the front surface of the electronic device 200, and a second camera module 216 disposed on the rear surface of the electronic device 200. In an embodiment, the electronic device 200 may also include a flash (not shown) positioned near the second camera module 216. In an embodiment, each of the camera modules 205 and 216 may include one or multiple lenses, an image sensor, and/or an image signal processor. In an embodiment, the first camera device 205 may also be disposed under the flexible display 230, and be configured to photograph a subject through a part of an active region (e.g., a display region) of the flexible display 230.

According to an embodiment, the first camera module 205 among the camera modules and a sensor module 204 of the sensor modules 204 and 217 may be arranged to detect an external environment through the flexible display 230. For example, the first camera module 205 or the sensor module 204 may be disposed to be in contact with an external environment through a transmission region or a perforated opening formed in the flexible display 230, in the second space 2201 of the second housing 220. In an embodiment, a region facing the first camera module 205 of the flexible display 230 may also be a part of an active region for displaying contents, and be formed as a transmission region having designated transmissivity. In an embodiment, the transmission region may be formed to have a transmissivity ranging from about 5% to about 20%. The transmission region may include a region overlapping an effective region (e.g., a view angle region) of the first camera module 205, through which light for generating an image to be imaged on an image sensor passes. For example, the transmissive region of the flexible display 230 may include a region having a lower pixel arrangement density and/or a lower wire density than the perimeter thereof. For example, the transmission region may be replaced with the above-described opening. For example, a camera module 205 may include an under-display camera (UDC). In some embodiments, the sensor module 204, which is a part thereof, may also be disposed to perform the function thereof while not being visually exposed through the flexible display 230 in the second space 2201 of the second housing 220.

According to an embodiment, the electronic device 200 may include at least one antenna element (e.g., the antenna element 224b in FIG. 4) electrically connected to a wireless communication circuit (e.g., the wireless communication module 192 in FIG. 1) disposed in an inner space (e.g., the second space 2201 of the second housing 220). In an embodiment, the electronic device 200 may also include a bezel antenna A disposed through at least a part of the first side member 211 of the first housing 210, which has conductivity. For example, the bezel antenna A may include a conductive portion 227 (e.g., a conductive member) disposed through at least a part of the second side surface 2112 and third side surface 2113 of the first side member 211 and electrically segmented through at least one segment part 2271 or 2272 formed of a non-conductive material (e.g., polymer). In an embodiment, a wireless communication circuit (e.g., the wireless communication module 192 in FIG. 1) may be configured to transmit or receive a wireless signal in at least one designated frequency band (e.g., about 600 MHz - 9000 MHz) (e.g., a legacy band or an NR band) through the conductive portion 227. In an embodiment, the electronic device 200 may include a side cover 2112a disposed on the second side surface 2112 in order to cover at least a part of the at least one segment part 2271. In some embodiments, the bezel antenna A may also be disposed on at least one of the first side surface 2111, the second side surface 2112, or the third side surface 2113. In some embodiments, the bezel antenna A may also be disposed on at least one of the fourth side surface 2211, the fifth side surface 2212, and the sixth side surface 2213 of the second housing 220. In some embodiments, the electronic device 200 may also further include at least one antenna module (e.g., a mmWave antenna module or a mmWave antenna structure) disposed in an inner space (e.g., the first space 2101 or the second space 2201) and disposed to transmit or receive a wireless signal in a frequency band in the range of about 3 GHz to 100 GHz through another wireless communication circuit (e.g., the wireless communication module 192 in FIG. 1).

According to an embodiment, the electronic device 200 may be configured to automatically perform slide-in/slide-out operations thereof. For example, slide-in/slide-out operations of the electronic device 200 may be performed through gear-coupling between a drive motor (e.g., the drive motor 260 in FIG. 4) including a pinion gear (e.g., the pinion gear 261 in FIG. 4), which is disposed in the first space 2101 of the first housing 210, and a rack gear (e.g., the rack gear 228 in FIG. 4) disposed in the second space 2201 of the second housing 220 and coupled to the pinion gear 261. In some embodiments, the drive motor 260 including the pinion gear 261 may also be disposed in the second space 2201 of the second housing 220, and the rack gear 228 coupled to the pinion gear 261 may also be disposed in the first space 2101 of the first housing 210. For example, a processor (e.g., the processor 120 in FIG. 1) of the electronic device 200 may be configured to operate a drive motor (e.g., the drive motor 260 in FIG. 4) disposed inside the electronic device 200 in case that the electronic device is changed from a slide-out state to a slide-in state or a triggering signal to change from a slide-in state to a slide-out state is detected. In an embodiment, the triggering signal may include a signal according to selection (e.g., touch) of an object displayed on the flexible display 230 or a signal according to an operation of a physical button (e.g., a key button) included in the electronic device 200. In some embodiments, slide-in/slide-out operations of the electronic device 200 may also be performed manually through a user manipulation.

According to an embodiment, the electronic device 200 may have a structure in which the second housing 220 slides in and/or slides out with reference to the first housing 210 along the length direction (e.g., the vertical direction) (e.g., the ±Y-axis direction) of the electronic device 200, but it is not limited thereto. For example, the electronic device 200 may also have a structure in which the second housing 220 slides in and/or slides out with reference to the first housing 210 along the width direction (e.g., the horizontal direction) (e.g., the ±X-axis direction) perpendicular to the length direction of the electronic device 200. In some embodiments, the electronic device 200 may also be formed such that the length of the second side surface 2112 of the first housing 210 is longer than the length of the first side surface 2111. In this case, the length of the fifth side surface 2212 of the second housing 220 may also be formed to be longer than the length of the fourth side surface 2211 so as to correspond thereto.

FIG. 4 is an exploded perspective view of an electronic device according to an embodiment of the disclosure.

In describing the electronic device 200 in FIG. 4, elements substantially the same as those of the electronic device 200 in FIG. 2A to FIG. 3B may be given identical reference numerals, and detailed descriptions thereof may be omitted.

Referring to FIG. 4, the electronic device 200 may include the first housing 210 including the first space 2101, the second housing 220 which is slidably coupled to the first housing 210 and includes the second space 2201, a support member 240 fixed to at least a part of the second housing 220 and accommodated in the first space 2101 to be at least partially bendable according to a slide-in operation thereof, the flexible display 230 disposed to be supported by at least a part of the support member 240 and the second housing 220, and a drive module (e.g., a drive mechanism) for driving the second housing 220 in a slide-in direction (e.g., the -Y-axis direction) and/or a slide-out direction (e.g., the Y-axis direction) from the first housing 210. In an embodiment, the first housing 210 may include the first side member 211 and the first rear cover 213 coupled to at least a part (e.g., at least a part of the first extension member 212) of the first side member 211. In an embodiment, the second housing 220 may include the second side member 221 and the second rear cover 223 coupled to at least a part (e.g., at least a part of the second extension member 222) of the second side member 221. In an embodiment, the drive module may include the drive motor 260 which is disposed in the first space 2101 and includes the pinion gear 261 and the rack gear 228 disposed to be gear-coupled to the pinion gear 261 in the second space 2201. In an embodiment, the drive module may further include a reduction module (e.g., a reduction gear assembly) coupled to the drive motor 260 and thus disposed to reduce a rotational speed and increase a drive force. In an embodiment, the drive motor 260 may be disposed to be supported by a motor bracket 260a which is disposed on the support bracket 225 disposed in the first space 2101 of the first housing 210. In an embodiment, the drive motor 260 may be fixed to the end (e.g., an edge) of the support bracket 225 in the slide-out direction (e.g., the Y-axis direction) thereof in the first space 2101. For example, the drive motor 260 may be disposed on a drive motor seat part formed on the support bracket. In an embodiment, the rack gear 228 may be disposed on the second extension member 222 of the second housing 220. In an embodiment, the rack gear 228 may be disposed to have a length in a direction parallel to the sliding direction (e.g., the ±Y-axis direction) thereof. Accordingly, in case that the electronic device 200 is assembled, the pinion gear 261 may maintain a state of being gear-coupled to the rack gear 228, the pinion gear 261 receiving a driving force provided from the drive motor 260 may move on the rack gear 228, and as a result, the second housing 220 may be moved with reference to the first housing 210. In an embodiment, a sliding distance of the second housing 220 may be determined by the length of the rack gear 228.

According to an embodiment, the electronic device 200 may include multiple electronic components arranged in the second space 2201. In an embodiment, the multiple electronic components may include a first substrate 251 (e.g., a main substrate), and the camera module 216, the speaker 207, the connector port 208, and the microphone 203-1 which are arranged around the first substrate 251. In an embodiment, multiple electronic components may be arranged around the first substrate 251 in the second space 2201 of the first housing 210 so that efficient electrical connection can be possible. In some embodiments, at least one of the multiple electronic components described above may also be disposed in the first space 2101 of the first housing 210.

According to an embodiment, the electronic device 200 may include a rear bracket 224 disposed between the second extension member 222 and the second rear cover 223 in the second housing 220. In an embodiment, the rear bracket 224 may be disposed to cover at least a part of the multiple electronic components. In an embodiment, the rear bracket 224 may be structurally coupled to at least a part of the second extension member 222. In some embodiments, the rear bracket 224 may also be omitted. In an embodiment, the rear bracket 224 may also be disposed to cover multiple electronic components and support the second rear cover 223. In an embodiment, the rear bracket 224 may include an opening 224a (e.g., a through-hole) or a notch region 224c (e.g., a cutting part) formed in a region corresponding to the camera module 216 and/or a sensor module (e.g., the sensor module 217 in FIG. 3B). In an embodiment, the rear bracket 224 may include at least one antenna element 224b. In an embodiment, the at least one antenna element 224b may be disposed on the outer surface thereof in case that the rear bracket 224 is formed of an injection-molded product (e.g., an antenna carrier) made of a dielectric material. In an embodiment, the at least one antenna element 224b may include a laser direct structuring (LDS) antenna pattern formed on the outer surface of the rear bracket 224. In some embodiments, the at least one antenna element 224b may also include a conductive plate attached to the outer surface of the rear bracket 224, a conductive paint formed on the outer surface, or a conductive pattern formed on the outer surface. In some embodiments, the at least one antenna element 224b may also be disposed in an embedded manner when the rear bracket 224 is injection-molded. In an embodiment, the at least one antenna element 224b may be electrically connected to a wireless communication circuit (e.g., the wireless communication module 192 in FIG. 1) disposed on the first substrate 251 and thus be configured to transmit or receive a wireless signal in a designated frequency band (e.g., a legacy band). In an embodiment, the camera module 216 and/or the sensor module 217 may be arranged to detect an external environment through the opening 224a or the notch region 224c. In an embodiment, a region of the second rear cover 223, which at least corresponds to the camera module 216 and/or the sensor module 217, may be transparently processed. In some embodiments, at least the second rear cover 223 may include a through-hole formed in a region corresponding to the camera module 216 and/or sensor module 217. In this case, the through-hole may be covered through a transparent window. In some embodiments, the camera module 216 and/or the sensor module 217 may also be configured to operate only in case that the electronic device 200 is in a slide-out state.

According to an embodiment, the electronic device 200 may include the support bracket 225 disposed in the first space 2101 of the first housing 210. In an embodiment, the support bracket 225 may include a support part 2252 which is disposed at one end thereof and has an outer surface formed in a curved shape, in order to support the rear surface of the support member 240, which is bent during a sliding operation of transitioning from a slide-out state to a slide-in state. In an embodiment, the support bracket 225 may include a support structure for supporting and fixing the drive motor 260 through the motor bracket 260a. In an embodiment, the support bracket 225 may include a battery seat part 2251 for accommodating a battery. In an embodiment, the drive motor 260 may be disposed at the most end (e.g., an edge) of the support bracket 225 in the slide-out direction (e.g., the Y-axis direction). For example, in case that the electronic device 200 has been assembled, the drive motor 260 may be disposed closest to the first substrate 251 among the electronic components arranged in the first housing 210, and thus it may contribute to the minimization of a size and/or a length of a flexible substrate F1 (e.g., a flexible printed circuit board (FPCB)) for electrically connecting the first substrate 251 and the drive motor 260. In an embodiment, the electronic device 200 may include a pair of guide rails 226 disposed on both side surfaces of the support bracket 225 to guide opposite ends of the support member 240 in the sliding direction.

According to an embodiment, the first housing 210 may include an opening 212a (e.g., a through-hole) of the first extension member 212, which is disposed in a region corresponding to the camera module 216 and/or the sensor module 217 arranged in the second housing 220, in case that the electronic device 200 is in a slide-in state. In an embodiment, the camera module 216 and/or the sensor module 217 may detect an external environment through the opening 212a formed in the first housing 210 in case that the electronic device 200 is in a slide-in state. In some embodiment, a region of the first rear cover 213, which corresponds to the camera module 216 and/or the sensor module 217, may also be transparently processed.

According to an embodiment, the electronic device 200 may include a second substrate 252 (e.g., a sub-substrate) and an antenna member 253, which are arranged between the first extension member 212 and the first rear cover 213, in the first housing 210. In an embodiment, the second substrate 252 and the antenna member 253 may be arranged on at least a part of the first extension member 212. In an embodiment, the second substrate 252 and the antenna member 253 may be electrically connected to the first substrate 251 through at least one electrical connection member (e.g., an FPCB, a flexible printed circuit board or an FRC, or a flexible RF cable). In an embodiment, the antenna member 253 may include a multi-function coil (MFC) or a multi-function core (MFC) antenna for performing a wireless charging function, a near-field communication (NFC) function, and/or an electronic payment function. In some embodiments, the antenna member 253 may be electrically connected to the second substrate 252, and thus may also be electrically connected to the first substrate 251 through the second substrate 252. In some embodiments, the second substrate 252 and/or the antenna member 253 may also be electrically connected to the first substrate 251 through at least a part of the flexible substrate F1 for connecting the drive motor 260 and the first substrate 251.

According to an embodiment, the support member 240 may be guided by the guide rails 226 during slide-in/slide-out operations. In an embodiment, the support member 240 may include multiple multi-bars 241 rotatably coupled to each other and guide protrusions 2411 protruding from opposite ends of each of the multiple multi-bars 241. In an embodiment, the guide rails 226 may include guide slits 2261 formed at a position corresponding to a movement trajectory of the support member 240. In an embodiment, in case that the support member 240 fixed to the rear surface of the flexible display 230 in an attachment manner is movably coupled to the guide rails 226, the guide protrusions 2411 may move along the guide slits 2261, and it may contribute to the reduction of a phenomenon in which the flexible display 230 is separated or deformed during an operation thereof.

According to an embodiment, the rack gear 228 may be disposed to be movable by a designated reciprocating distance in the sliding direction (e.g., the ±Y-axis direction) of the second housing 220. In an embodiment, the electronic device 200 may include a stopper assembly disposed on the support bracket 225 of the first housing 210 and disposed to at least partially interfere with a movement of the rack gear 228. In an embodiment, the stopper assembly may be at least partially fastened to the first housing 210 through at least partial interference of the rack gear 228 in a state where the second housing 220 is completely slid out, and thus may perform a locking function to maintain a slide-out state. In the slide-out state, the locking function of the stopper assembly may reduce the phenomenon in which the second housing 220 is forcedly moved due to external impact such as falling, and thus may contribute to the reduction of damage of the pinion gear 261 and the rack gear 228 which are gear-coupled to each other.

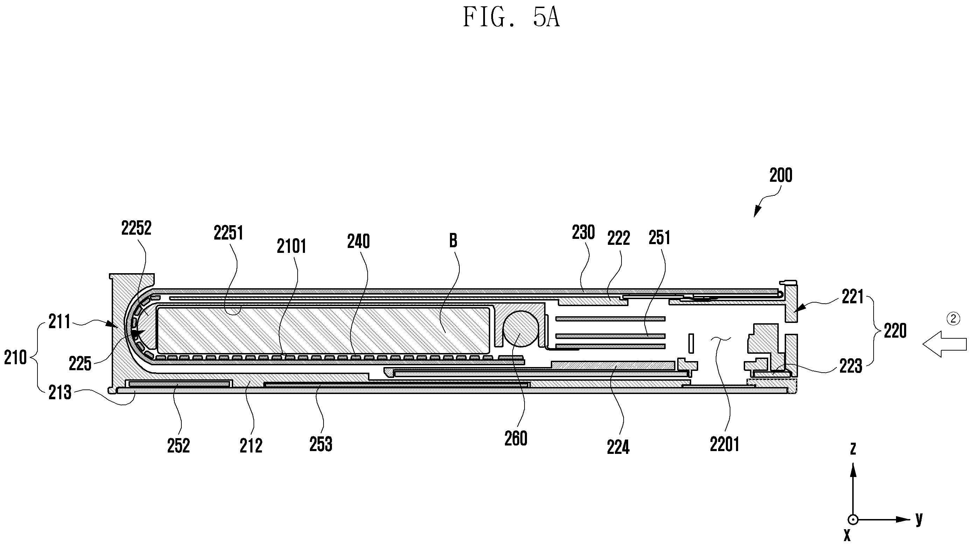

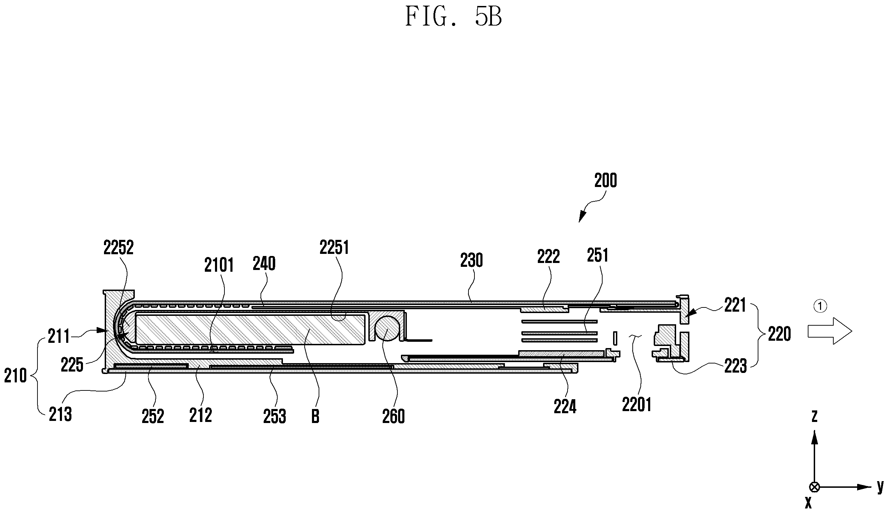

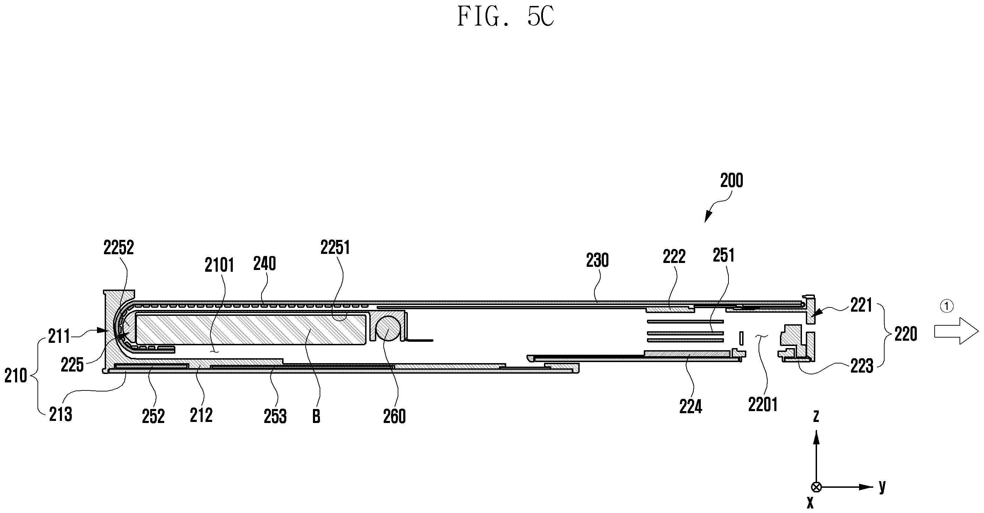

FIG. 5A is a cross-sectional view of the electronic device seen along line 5a-5a in FIG. 2A according to an embodiment of the disclosure. FIG. 5B is a cross-sectional view of an electronic device in an intermediate state according to an embodiment of the disclosure. FIG. 5C is a cross-sectional view of the electronic device seen along line 5c-5c in FIG. 3A according to an embodiment of the disclosure.

In describing the electronic device 200 in FIG. 5A to FIG. 5C, elements substantially the same as those of the electronic device 200 in FIG. 4 may be given the same reference numerals, and detailed descriptions thereof may be omitted.

Referring to FIG. 5A to FIG. 5C, the electronic device 200 may include the first housing 210 having the first space 2101, the second housing 220 having the second space 2201, the support member 240 connected to the second housing 220 and at least partially accommodated in the first space 2101 in a slide-in state, the flexible display 230 disposed to be supported by at least a part of the support member 240 and at least a part of the second housing 220, and the drive motor 260 which is disposed in the first space 2101 and includes a pinion gear (e.g., the pinion gear 261 in FIG. 4) coupled to a rack gear (e.g., the rack gear 228 in FIG. 4) of the second space 2201. In an embodiment, the drive motor 260 may automatically move the second housing 220 in the slide-in direction (the direction ②) or the slide-out direction (the direction ①) with reference to the second housing 210 through gear-coupling between a pinion gear (e.g., the pinion gear 261 in FIG. 4) and a rack gear (e.g., the rack gear 228 in FIG. 4).

According to an embodiment, at least a part of the second housing 220 may be accommodated in the first space 2101 of the first housing 210 in a slide-in state (the state of FIG. 5A) of the electronic device 200. In an embodiment, at least a part of the flexible display 230 may be accommodated in the first space 2101 in a bending manner together with the support member 240, and thus be disposed to be invisible from the outside. In this case, a first display area (e.g., a display region corresponding to the first portion 230a in FIG. 3A) of the flexible display 230 may be exposed to the outside.

According to an embodiment, the electronic device 200 may be configured to control an operation of the drive motor 260 and thus be transited from an intermediate state (the state of FIG. 5B) to a slide-out state (the state of FIG. 5C). In some embodiments, the electronic device 200 may also be configured to stop in a designated intermediate state between a slide-in state and a slide-out state (a free stop function). In some embodiments, the electronic device 200 may also be transited to a slide-in state, an intermediate state, or a slide-out state through user manipulation in a state where no driving force is provided to the drive motor 260.

According to an embodiment, at least a part of the second housing 220 may be transited to a slide-out state of being at least partially moved to the outside from the first housing 210 along the first direction (the direction ①) through an operation of the drive motor 260. In an embodiment, the flexible display 230 may move together with the support member 240 while being supported by the support bracket 225 in a slide-out state (the state of FIG. 5C) of the electronic device 200, and thus the portion thereof, which is slid into the first space 2101, may be at least partially exposed to the outside. In this case, the second display area (e.g., a display region including the first portion 230a and the second portion 230b in FIG. 3A) of the flexible display 230, which is enlarged beyond the first display area, may be exposed to the outside.

According to an embodiment, the electronic device 200 may include a battery B disposed through the battery seat part 2251 of the support bracket 225 which is fixed to the first space 2101 of the first housing 210. In an embodiment, the battery B may be disposed in the first housing 210 so that a separate drive gap for avoiding interference with surrounding structures according to a movement thereof is not required. Therefore, the battery B may have a thickness enlarged in a manner of approaching to or being in contact with the rear surface of the support member 240 from the battery seat part 2251 of the support bracket 225, and thus may contribute to the relative increase in volume of the battery, the reduction of a sagging phenomenon of the flexible display 230 by supporting the moving support member 240, and the improved operational reliability.

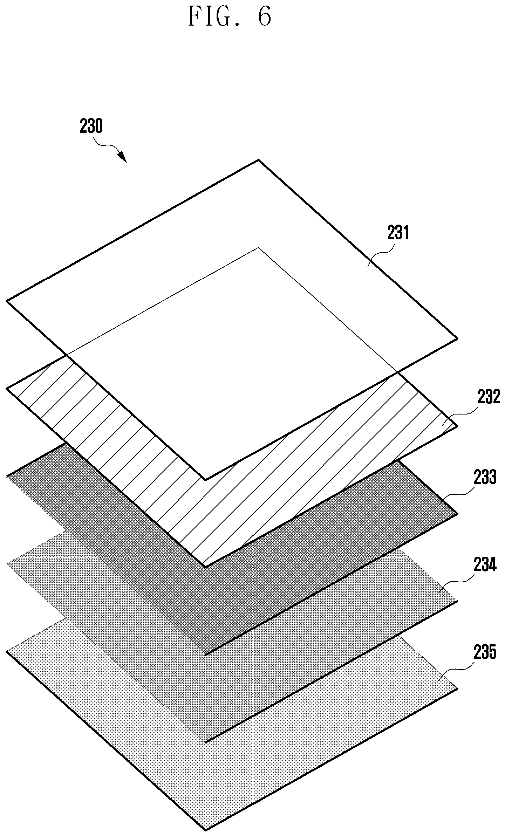

FIG. 6 is an exploded perspective view of a protective film 300 and a flexible display 230 according to an embodiment of the disclosure.

According to an embodiment, the flexible display 230 may include an unbreakable (UB)-type OLED display (e.g., a curved display). However, it is not limited thereto, and the flexible display 230 may also include a flat-type display of an on-cell touch (OCTA) active matrix organic light-emitting diode (AMOLED) manner.

According to an embodiment, as illustrated in FIG. 6, the flexible display 230 may include a protective layer 231, and a window layer 232, a polarizer (POL) 233 (e.g., a polarization film), a display panel 234, and a polymer layer 235 which are sequentially arranged on the lower part of the protective layer 231. In some embodiments, the flexible display 230 may include a digitizer panel (not shown) disposed on the lower part of the polymer layer 235.

According to an embodiment, the protective layer 231 may be attached to the upper part of the window layer 232 so as to protect the window layer 232. In an embodiment, the protective layer 231 may be formed of a hard material having a predetermined level of rigidity or more to ensure durability against an external force. For example, the protective layer 231 may be formed of a polymer material such as polyethylene terephthalate (PET), thermalplastic polyurethane (TPU), polyurethane (PU), and polyimide (PI). In addition, the protective layer 231 may also include a coating layer (e.g., a hard coating layer or a Teflon coating layer) coated with a low friction member.

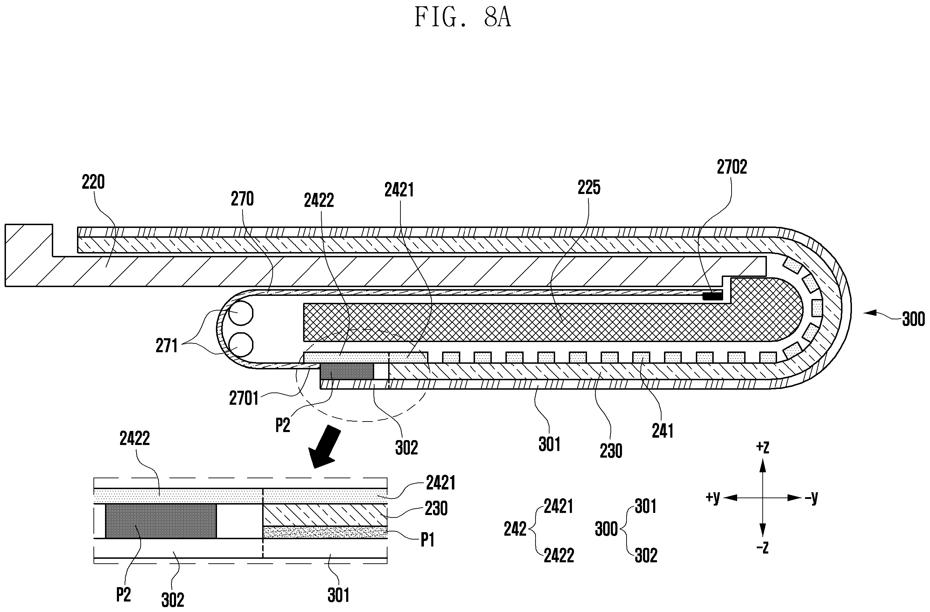

In an embodiment, the protective film 300 may be attached to the outermost layer of the flexible display 230 so as to protect the protective layer 231. For example, the protective film 300 may be attached to the protective layer 231. In an embodiment, the protective film 300 may be a configuration exposed on the exterior of the electronic device 200. The protective film 300 may be exposed to an external environment of the electronic device 200 and accordingly, be variously damaged. The protective film 300 may be attached to the protective layer 231 of the flexible display 230 through an adhesive member (e.g., the first adhesive member P1 in FIG. 8A) having an adhesive force which allows the protective layer to be peeled off from the flexible display 230 so as to enable replacement according to the degree of damage. In some embodiments, in case that the protective layer 231 is not disposed in the flexible display 230, the protective film 300 may be directly attached to the window layer 232 to protect the window layer 232 from an external environment.

According to an embodiment, the window layer 232 may include a glass layer. According to an embodiment, the window layer 232 may include an ultra-thin glass (UTG). In some embodiments, the window layer 232 may also include polymer. In this case, the window layer 232 may include polyethylene terephthalate (PET) or polyimide (PI). In some embodiments, the window layer 232 may also be disposed as multiple layers to include a glass layer and a polymer. In an embodiment, the display panel 234 may include multiple pixels and a wire structure. In an embodiment, the polarizer 233 may selectively transmit light which is generated from a light source of the display panel 234 and vibrates in a predetermined direction. In an embodiment, the polymer layer 235 may be disposed on the lower part of the display panel 234 to provide a dark background for ensuring visibility of the display panel 234, and be formed of a buffer material for buffering action.

Meanwhile, as described above, the protective layer 231 may be disposed as the outermost layer of the flexible display 230. A polymer material constituting the protective layer 231 or a member, such as a hard coating layer or a Teflon coating layer, constituting the protective layer 231 may be a low friction member having low surface roughness. In case that the protective film 300 is attached to the protective layer 231, compared to the case where the protective film 300 is attached to a metal (e.g., alloy such as aluminum, stainless steel (STS or SUS), iron, magnesium, titanium, etc.) material or a material such as a non-metal (e.g., synthetic resin, ceramic, engineering plastic) material having high surface roughness, an attachment force of the protective film with respect to the protective layer 231 may not be secured, and accordingly, the protective film may be easily peeled off from the protective layer 231. For example, an adhesive member (e.g., the first adhesive member P1) disposed between the protective film 300 and the flexible display 230 may be easily peeled off from the protective layer 231 of the flexible display 230 in a state of being attached to the protective film 300. In addition, in some embodiments, the protective film 300 may be directly attached to the window layer 232. A material, such as PET, PI and/or UTG, constituting the window layer 232 may also be a low friction member having low surface roughness. Accordingly, in case that the protective film 300 is attached to the window layer 232, compared to the case where the protective film 300 is attached to a material, such as a metal material or a non-metal material, having high surface roughness, an attachment force of the protective film with respect to the window layer 232 may not be secured so that the protective film is peeled off from the window layer 232. Since the protective film 300 should be replaced from the flexible display 230 according to the degree of damage, the adhesive force of an adhesive member (e.g., the first adhesive member P1) for bonding the flexible display 230 and the protective film 300 cannot be indefinitely increased.

In an embodiment, the protective film 300 may be attached only to a display region (an active region) of the flexible display 230, in which a screen is displayed. For example, the protective film 300 may be attached to a region of the protective layer 231, which corresponds to a region of the first portion 230a (e.g., a flat-surface part) and the second portion 230b (e.g., a bendable part, a bending part, and/or an inner region) of the flexible display 230 where the screen is displayed. In this case, the end of the protective film 300 may be positioned in the second portion 230b of the flexible display 230. For example, the end of the protective film 300 may be positioned in an inner space (e.g., the first space 2101) of the electronic device 200 together with the second portion 230b of the flexible display 230 in case that the electronic device 200 is in a slide-in state, and may be positioned in a section in which the second portion 230b of the flexible display 230 is bent in case that the electronic device 200 is in a slide-out state. In this case, a repulsive force may be generated as at least a part of the bending section of the second portion 230b of the flexible display 230 is bent in case that the electronic device 200 is in a slide-out state, and thus the end of the protective film 300 may be peeled off from the flexible display 230. In some embodiments, the protective film 300 may be attached to the entire region of the flexible display 230. In this case, the end of the protective film 300 may be positioned at the end (or the end of the second portion 230b) of the flexible display 230, and may be positioned in an inner space (e.g., the first space 2101) of the electronic device 200 in case that the electronic device 200 is in a slide-out state. In this case, compared to the case that the electronic device is in a slide-in state, in case that the electronic device 200 is in a slide-out state, in a region of the protective film 300, which is attached to the second portion 230b of the flexible display 230, the length of a region, which is positioned in an inner space (e.g., the first space 2101) of the electronic device 200 and is a flat surface, may be decreased. As the length of the flat surface region of the protective film, which is positioned in an inner space of the electronic device 200, becomes shorter, the protective film 300 may be easily peeled off from the flexible display 230 through the repulsive force generated as at least a part of the second portion 230b of the flexible display 230 is bent.

According to an embodiment of the disclosure, a region of the protective film 300 may be attached to an element other than the flexible display 230. For example, a region (e.g., the end) of the protective film 300 may be attached to a material having surface roughness higher than the protective layer 231 of the flexible display 230. Accordingly, compared to the case where the protective film 300 is attached only to the protective layer 231 of the flexible display 230, the phenomenon, in which the protective is peeled off from the protective layer 231 of the flexible display 230, can be alleviated or reduced. Hereinafter, the structure thereof will be described in detail.

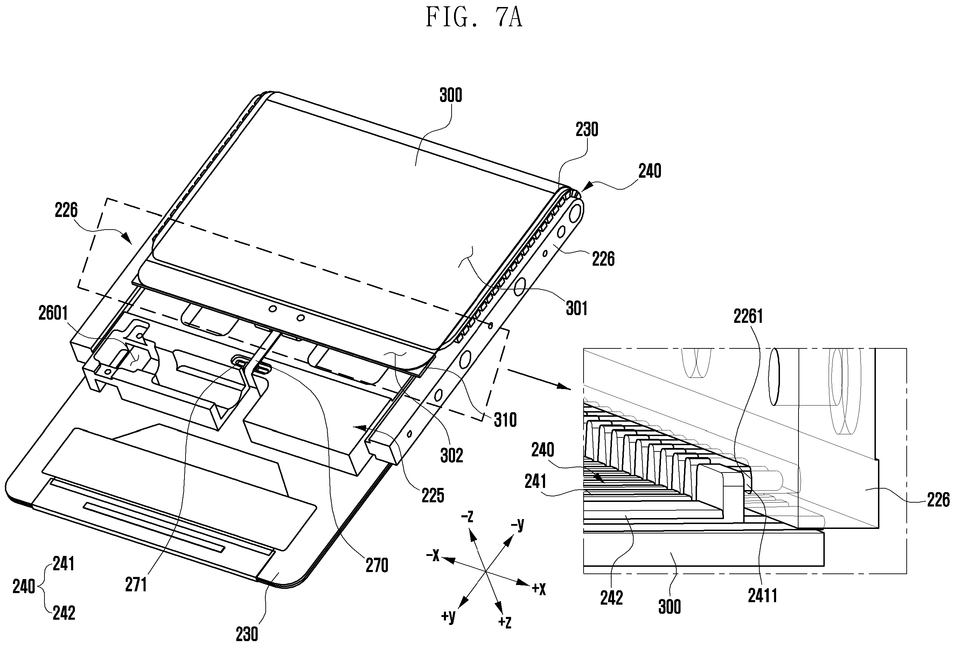

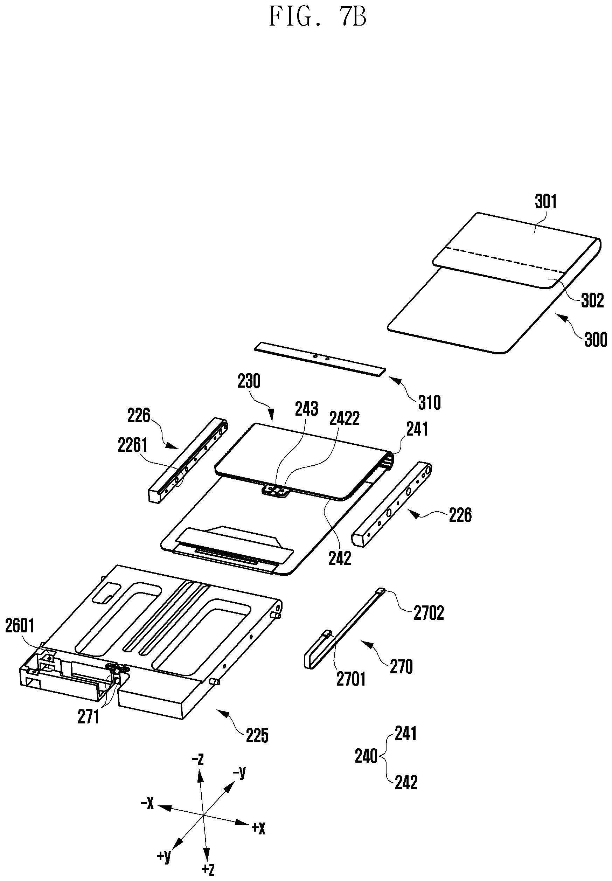

FIG. 7A is a view showing a coupling state of a flexible display 230, in which a protective film 300 is attached to a support bracket 225 in case that an electronic device 200 is in a slide-in state. FIG. 7B is an exploded perspective view showing a configuration of the electronic device 200 illustrated in FIG. 7A.

According to an embodiment, as illustrated in FIG. 7A and FIG. 7B, the flexible display 230 may be disposed on the support member 240. In an embodiment, in a slide-in state, at least a part (e.g., the second portion 230b) of the flexible display 230 may be accommodated in a bending manner in the first space 2101 of the first housing 210 while being supported by the support member 240, and thus be disposed to be invisible from the outside. In an embodiment, the end (e.g., the end of the flexible display 230) of the second portion 230b of the flexible display 230 may always be positioned in the first space 2101 of the first housing 210 regardless of slide-in or slide-out states of the electronic device 200.

In an embodiment, the support member 240 may include a support bar 242 disposed on the multiple multi-bars 241 for supporting a region of the flexible display 230 and at the end of the flexible display 230, and positioned in the first space 2101 of the first housing 210. In an embodiment, at least a part of the support bar 242 may support the end of the flexible display 230, which is positioned in the first space 2101 of the first housing 210. In an embodiment, the support bar 242 may always be positioned in the first space 2101 of the first housing 210 regardless of slide-in or slide-out states of the electronic device 200.

In an embodiment, each of the multiple multi-bars 241 may include the guide protrusions 2411 protruding at opposite ends thereof. The guide protrusions 2411 of each of the multiple multi-bars 241 may be inserted into the guide slits 2261 formed on the guide rails 226 and be movably coupled to the guide rails 226.

According to an embodiment, the flexible display 230 may be supported through the support bracket 225. In an embodiment, the support bracket 225 may support the support member 240 disposed on the rear surface of the flexible display 230. In an embodiment, as the guide rails 226 are arranged on both side surfaces of the support bracket 225, the flexible display 230 may be supported through the support bracket 225 according to a sliding operation of the electronic device 200, and thus may slide along the guide rails 226.

According to an embodiment, as illustrated in FIG. 7A and FIG. 7B, the electronic device 200 may include at least one drive belt 270 (e.g., a life belt or a tension belt) for supporting the flexible display 230 and providing uniform tension during an operation thereof to reduce the lifting of the flexible display 230. In an embodiment, the drive belt 270 may contribute to the reduction of a drive resistance force due to eccentricity of the second housing 220 moved by driving of the drive motor 260. In an embodiment, one end 2701 of the drive belt 270 may be fixed to the support bar 242, and the other end 2702 thereof may be fixed to at least a part of the second extension member 222 of the second housing 220. In an embodiment, one end 2701 of the drive belt 270 may be seated in a seat part 243 formed in the second support part 2422 of the support bar 242 and be fixed to a second support part 2422 through a fixation plate 310 disposed on the second support part 2422. In an embodiment, the drive belt 270 may be disposed in a manner of being wound around at least one rotation roller 271 which is rotatably disposed on the support bracket 225. In an embodiment, in case that the second housing 220 is transited from a slide-in state to a slide-out state, one end 2701 of the drive belt 270 may be moved in the direction (e.g., the -Y-axis direction) of the first space along the support bar 242, and the other end 2702 of the drive belt 270 may be moved in the direction (e.g., the Y-axis direction) of the second space along the second housing 220 by a movement amount corresponding thereto. For example, the drive belt 270 may move while being supported by the at least one rotation roller 271 and the support part 2252 of the support bracket 225, but the distance from one end 2701 fixed to the support bar 242 to the other end 2702 fixed to the second housing 220 may not change. Accordingly, the drive belt 270 may contribute to the flexible display 230 always maintaining a tight state even during a sliding operation.

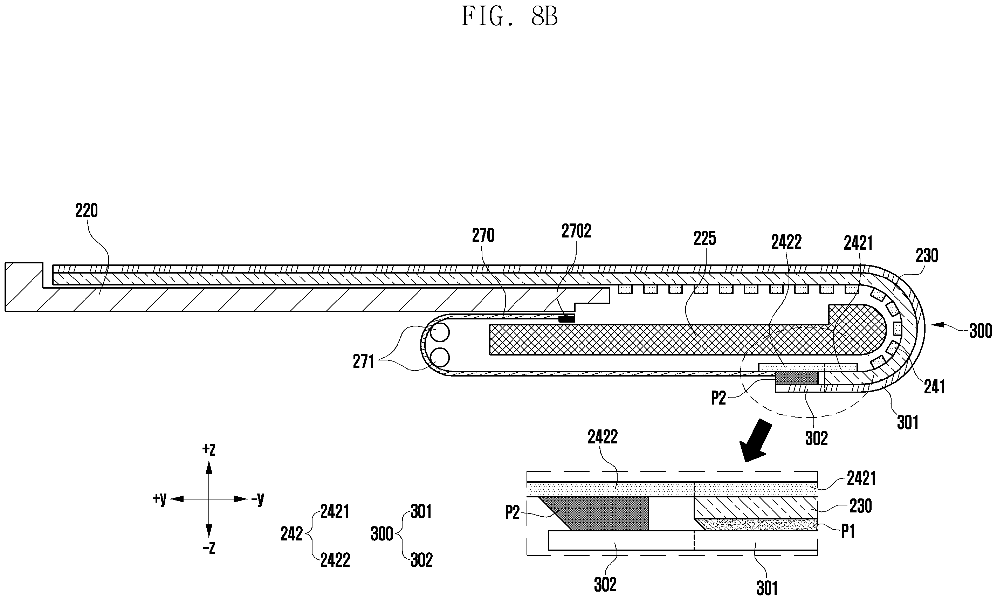

FIG. 8A is a cross-sectional view showing the state cut along line P1-P1 in FIG. 2A according to an embodiment of the disclosure. FIG. 8B is a cross-sectional view showing the state cut along line P2-P2 in FIG. 3A according to an embodiment of the disclosure.

According to an embodiment, the support bar 242 may slide along the guide rails 226, in the first space 2101 of the first housing 210. At least a part of the support bar 242 may support the end of the second portion 230b (e.g., a bendable part, a bending part, and/or an inner region) of the flexible display 230, which is positioned in the first space 2101 of the first housing 210. In an embodiment, the support bar 242 may include a first support part 2421 for supporting the end of the flexible display 230 and a second support part 2422 which extend from the first support part 2421 and is adjacent to the end of the flexible display 230. For example, the second support part 2422 may extend in the +Y-axis direction in FIG. 8A with respect to the first support part 2421 and thus be adjacent to the end of the flexible display 230. In an embodiment, the second support part 2422 may be a portion of the support bar 242, which does not support the flexible display 230. In an embodiment, when seen in the +Z-axis direction in FIG. 8A, at least a part of the second support part 2422 may be in contact with the end of the flexible display 230.

In an embodiment, the support bar 242 may be formed of a material having surface roughness higher than the protective layer 231 of the flexible display 230. For example, the support bar 242 may be formed of a material, such as a metal (e.g., aluminum, stainless steel (STS, SUS), alloy of iron, magnesium, titanium, etc.) material or a non-metal (e.g., synthetic resin, ceramic, engineering plastic) material, having surface roughness higher than the surface roughness of the protective layer 231 of the flexible display 230. Accordingly, as will be described later, the protective film 300 may have an adhesive force higher than the protective layer 231 of the flexible display 230, with respect to the second support part 2422 of the support bar 242.

According to an embodiment, the length (e.g., the length in the Y-axis direction in FIG. 8A) in the first direction of the protective film 300 may be formed longer than the length (e.g., the length in the Y-axis direction in FIG. 8A) in the first direction of the flexible display 230. In this case, a part of the protective film 300 may protrude with respect to an end of the flexible display 230. For example, a part of the protective film 300 may protrude with respect to the end of the second portion 230b (e.g., an inner region) of the flexible display 230, which is positioned in the first space 2101 of the first housing 210. The remaining regions, except for a region attached to the flexible display 230, of the protective film 300 may be attached to a mechanical member positioned in the first space 2101 of the first housing 210. For example, a part of the protective film 300 may be attached to the second support part 2422 of the support bar 242.

In an embodiment, the protective film 300 may include a first attachment region 301 attached to the flexible display 230 and a second attachment region 302 extending from first attachment region 301. In an embodiment, the second attachment region 302 may be a region which is not bonded to the flexible display 230. In an embodiment, the first attachment region 301 of the protective film 300 may face the first support part 2421 of the support bar 242, and at least a part of the second attachment region 302 of the protective film 300 may face the second support part 2422 of the support bar 242.

According to an embodiment, as illustrated in FIG. 8A and FIG. 8B, the first attachment region 301 of the protective film 300 may be attached to the protective layer 231 of the flexible display 230, and the second attachment region 302 may be attached to the second support part 2422 of the support bar 242. In an embodiment, the first attachment region 301 of the protective film 300 may be attached to the protective layer 231 of the flexible display 230 by means of the first adhesive member P1. The second attachment region 302 of the protective film 300 may be attached to the second support part 2422 of the support bar 242 by means of the second adhesive member P2. As described above, the support bar 242 may be formed of a material having surface roughness higher than the protective layer 231. In this case, the adhesive force between the second support part 2422 and the second attachment region 302 by means of the second adhesive member P2 may be stronger than the adhesive force between the protective layer 231 and the first attachment region 301 by means of the first adhesive member P1. Therefore, compared to the case where the protective film 300 is attached only to the protective layer 231 of the flexible display 230 as the second attachment region 302 is attached to the second support part 2422 of the support bar 242, which has surface roughness higher than the protective layer 231 of the flexible display 230, the peeling of the protective film 300 from the flexible display 230 may be reduced or alleviated. Particularly, in case that the electronic device 200 is in a slide-out state, a part of the protective film 300 may be bent together with a part of the second portion 230b of the flexible display 230. Even if a repulsive force occurs in the bending section, the protective film 300 may not be peeled off from the flexible display 230 as the second attachment region 302 of the protective film 300 is fixed to the second support part 2422 of the support bar 242. In addition, since the coupling force between the second attachment region 302 of the protective film 300 and the second support part 2422 is stronger than the coupling force between the first attachment region 301 and the protective layer 231, in case that the protective film 300 is replaced, after separating the support bar 242 from the electronic device 200, the protective film 300 may be peeled from the flexible display 230 in a state of gripping the support bar 242.

According to an embodiment, the thicknesses of the first adhesive member P1 and the second adhesive member P2 may be determined based on the degree of slipping of the protective film 300 with respect to the flexible display 230 according to the difference between the curvature radius of the bending section of the flexible display 230 and the curvature radius of the bending section of the protective film 300. According to an embodiment, according to a sliding operation of the electronic device 200, a slip phenomenon in which the protective film 300 slips with respect to the flexible display 230 may occur. In an embodiment, referring to FIG. 8B, the second portion 230b of the flexible display 230 may be in a state in which at least a part thereof is bent. The protective film 300 may be introduced into the first space 2101 while being bent together with the second portion 230b of the flexible display 230. Since the protective film 300 is attached to the outermost layer (e.g., the protective layer 231) of the flexible display 230, the bending section of the protective film 300 may have a curvature radius larger than the bending section of the second portion 230b of the flexible display 230. Therefore, in case that the electronic device 200 is switched from a slide-in state to a slide-out state, the amount by which a portion of the protective film 300, which is positioned in the second portion 230b of the flexible display 230, moves in the -Y-axis direction in the first space 2101 may be larger than the amount by which the second portion 230b of the flexible display 230 moves in the -Y-axis direction in the first space 2101 of the first housing 210. Accordingly, in case that the electronic device 200 is switched from a slide-in state to a slide-out state, the end of the protective film 300, which is positioned in the first space 2101 of the first housing 210, may move in the -Y-axis direction with respect to the end of the flexible display 230, based on FIG. 8B. A part of the shape of the first adhesive member P1 may be deformed in the -Y-axis direction in a state of being bonded to the protective layer 231, based on the movement of the protective film 300. In addition, a part of the shape of the second adhesive member P2 may be deformed in the -Y-axis direction in a state of being bonded to the second support part 2422, based on the movement of the protective film 300. Therefore, the change in relative position of one end of the protective film 300 and one end of the flexible display 230, which is based on the difference between the curvature radius of the bending section of the second portion 230b of the flexible display 230 and the curvature radius of the bending section of the protective film 300, may be allowed due to the first adhesive member P1 and the second adhesive member P2.

According to an embodiment, the first adhesive member P1 and the second adhesive member P2 may be formed to have the same adhesive force. In some embodiments, in order for the protective film 300 to be easily replaced, the first adhesive member P1 and the second adhesive member P2 may be configured to have different adhesive forces. For example, the second adhesive member P2 may be formed of a material having an adhesive force higher than the first adhesive member P1. In this case, the coupling force between the second attachment region 302 of the protective film 300 and the second support part 2422 of the support bar 242 may be larger than the coupling force between the first attachment region 301 of the protective film 300 and the protective layer 231. Therefore, in case of replacing the protective film 300, after separating the support bar 242 from the electronic device 200, the protective film 300 may be peeled from the flexible display 230 in a state of gripping the support bar 242.

In an embodiment, referring to FIG. 8A and FIG. 8B, the second adhesive member P2 may be formed to have a thickness thicker than the first adhesive member P1 to allow the first attachment region 301 and the second attachment region 302 of the protective film 300 to become a flat surface in a region corresponding to the support bar 242. For example, since the support bar 242 supports the flexible display 230, the gap (e.g., the length in the Z-axis direction based on FIG. 8A) between the second support part 2422 of the support bar 242 and the second attachment region 302 of the protective film 300 may be wider than the gap (e.g., the length in Z-axis direction based on FIG. 8A) between the flexible display 230 and the first attachment region 301 of the protective film 300. Therefore, the protective film 300 may become a substantially flat surface in a region corresponding to the support bar 242 as the second adhesive member P2 is formed to have a thickness thicker than the first adhesive member P1.

In the above description, the support bar 242 has been described as including the first support part 2421 and the second support part 2422. However, it may not be that the first support part 2421 and the second support part 2422 are limited as physically separate elements. For example, the first support part 2421 and the second support part 2422 are merely a division for explaining the relationship with the flexible display 230, and may not be physically separate elements. Likewise, the protective film 300 has been described as including a first attachment region 301 and a second attachment region 302. However, it is a division for convenience of explanation, and the first attachment region 301 and the second attachment region 302 may not be physically separate elements.

In an embodiment, the first adhesive member P1 and the second adhesive member P2 may be formed of a soft material such as acrylic series, silicone series, rubber series, and urethane series to enable the bending thereof and to allow the first adhesive member and the second adhesive member to be bendable together with the flexible display 230 according to slide-in or slide-out operations of the electronic device 200.

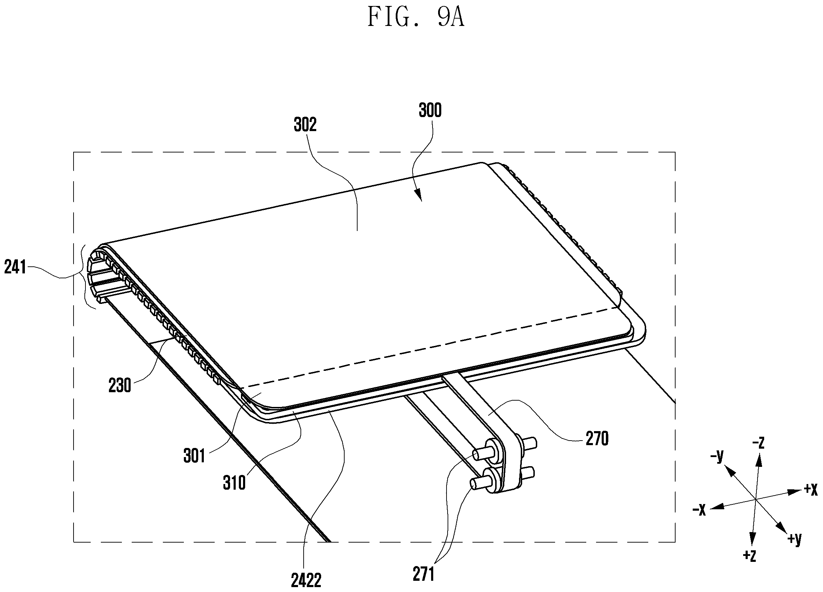

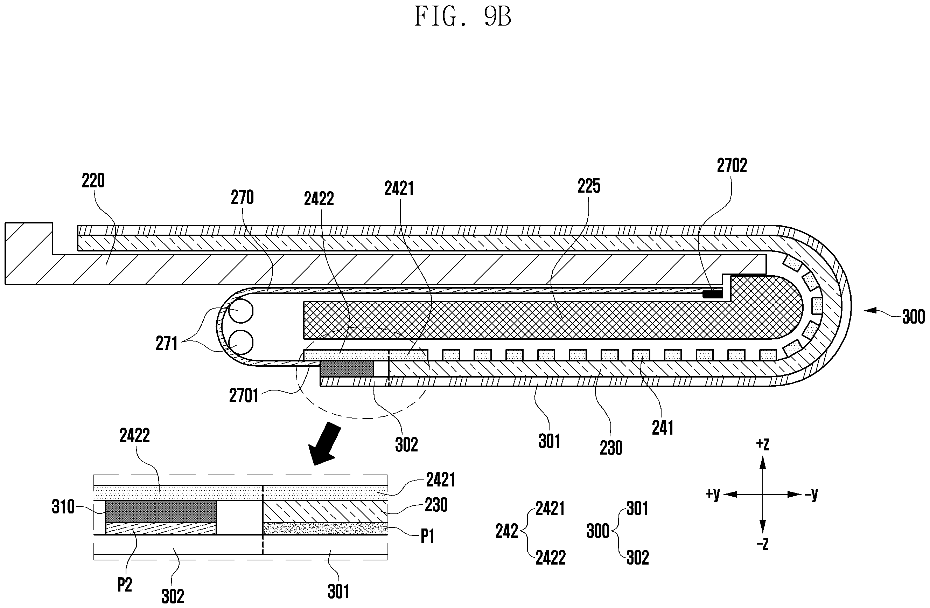

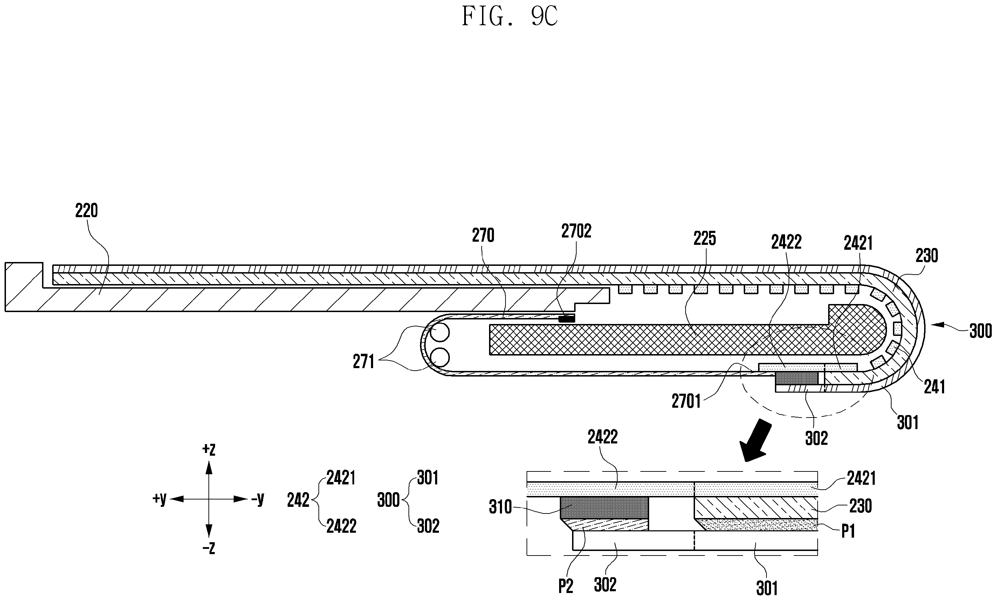

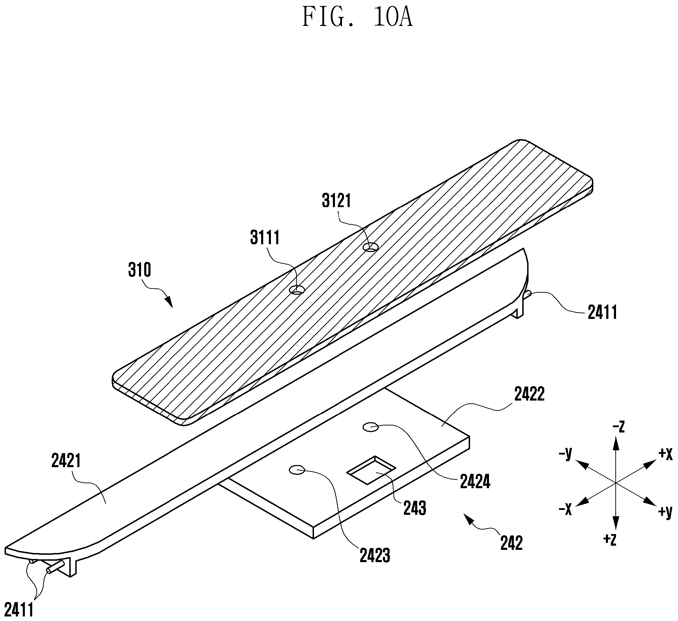

FIG. 9A is a view showing a state in which a second attachment region 302 of a protective film 300 is bonded to a fixation plate 310 disposed on a second support part 2422 of a support bar 242 according to an embodiment of the disclosure. FIG. 9B and FIG. 9C are views showing a state in which a fixation plate 310 for fixing a drive belt 270 is disposed between the second support part 2422 of the support bar 242 and the second attachment region 302 of the protective film 300 illustrated in FIG. 8A and FIG. 8B. FIG. 10A to FIG. 10F are views showing various embodiments of a coupling relationship between a fixation plate 310 and a second support part 2422 of a support bar 242 according to an embodiment of the disclosure.

Hereinafter, an embodiment, in which a fixation plate 310 for fixing the drive belt 270 to the support bar 242 is disposed between the support bar 242 and the protective film 300 described in FIG. 8A and FIG. 8B, is described. For example, the fixation plate 310 may be disposed between the second support part 2422 of the support bar 242 and the second attachment region 302 of the protective film 300. Hereinafter, descriptions about configurations, which are the same as or similar to the configurations described previously, will be omitted.

According to an embodiment, as illustrated in FIG. 9A, the fixation plate 310 may be disposed between the second support part 2422 of the support bar 242 and the second attachment region 302 of the protective film 300. In an embodiment, the fixation plate 310 may be disposed on the second support part 2422 to cover one end of the drive belt 270 disposed in the seat part 243 of the second support part 2422, and be disposed on the second support part 2422 to fix one end of the drive belt 270 to the second support part 2422. For example, the fixation plate 310 may be coupled to the support bar 242 through a fixation member (e.g., a screw, a rivet, and/or a bolt and a nut) so as to fix one end of the drive belt 270 to the second support part 2422 of the support bar 242.

In an embodiment, the fixation plate 310 may be formed to have a size corresponding to the second attachment region 302 of the protective film 300. For example, referring to FIG. 9A, the width (e.g., the length in the X-axis direction in FIG. 9A) of the fixation plate 310 may correspond to the width (e.g., the length in the X-axis direction in FIG. 9A) of the second attachment region 302. In some embodiments, the fixation plate 310 may be formed to have a size corresponding to the second support part 2422 and smaller than the width of the second attachment region 302. For example, the fixation plate 310 may be formed to have a size included in the second attachment region 302. In this case, as the space occupied by the fixation plate 310 and the second support part 2422 reduces in the first space 2101 of the first housing 210, a space, in which electronic components can be arranged, may be enlarged as much as the reduced corresponding space.

In an embodiment, the fixation plate 310 may be formed of a material having surface roughness higher than the protective layer 231 of the flexible display 230. For example, the fixation plate 310 may be formed of a material, such as a metal (e.g., aluminum, stainless steel (STS, SUS), alloy of iron, magnesium, titanium, etc.) material or a non-metal (e.g., synthetic resin, ceramic, engineering plastic) material, having surface roughness higher than the surface roughness of the protective layer 231 of the flexible display 230. Therefore, as will be described later, the protective film 300 may have an adhesive force larger than that of the protective layer 231 of the flexible display 230, with respect to the fixation plate 310.

According to an embodiment, as illustrated in FIG. 9B and FIG. 9C, the first attachment region 301 of the protective film 300 may be attached to the protective layer 231 of the flexible display 230, and the second attachment region 302 may be attached to the fixation plate 310. In an embodiment, the first attachment region 301 of the protective film 300 may be attached to the protective layer 231 of the flexible display 230 by means of the first adhesive member P1. The second attachment region 302 of the protective film 300 may be attached to the fixation plate 310 by means of the second adhesive member P2. As described above, the fixation plate 310 may be formed of a material having surface roughness higher than the protective layer 231. In this case, the adhesive force between the fixation plate 310 and the second attachment region 302 by means of the second adhesive member P2 may be stronger than the adhesive force between the protective layer 231 and the first attachment region 301 by means of the first adhesive member P1. Therefore, compared to the case where the protective film 300 is attached only to the protective layer 231 of the flexible display 230 as the second attachment region 302 is attached to the fixation plate 310 having surface roughness higher than the protective layer 231 of the flexible display 230, the peeling of the protective film 300 from the flexible display 230 may be reduced or alleviated. Particularly, in case that the electronic device 200 is in a slide-out state, a part of the protective film 300 may be bent together with a part of the second portion 230b of the flexible display 230. Even if a repulsive force occurs in the bending section, the protective film 300 may not be peeled off from the flexible display 230 as the second attachment region 302 of the protective film 300 is fixed to the fixation plate 310. In addition, since the coupling force between the second attachment region 302 of the protective film 300 and the fixation plate 310 is stronger than the coupling force between the first attachment region 301 and the protective layer 231, in case that the protective film 300 is replaced, after separating the fixation plate 310 from the electronic device 200, the protective film 300 may be peeled from the flexible display 230 in a state of gripping the fixation plate 310.

According to an embodiment, the thicknesses of the first adhesive member P1 and the second adhesive member P2 may be determined based on the degree of slipping of the protective film 300 with respect to the flexible display 230 according to the difference between the curvature radius of the bending section of the flexible display 230 and the curvature radius of the bending section of the protective film 300. As described in FIG. 8A and FIG. 8B, since the protective film 300 is attached to the outermost layer (e.g., the protective layer 231) of the flexible display 230, the bending section of the protective film 300 may have a curvature radius larger than the bending section of the second portion 230b of the flexible display 230. Therefore, in case that the electronic device 200 is switched from a slide-in state to a slide-out state, the amount by which a portion of the protective film 300, which is positioned in the second portion 230b of the flexible display, moves in the -Y-axis direction in the first space 2101 may be larger than the amount by which the second portion 230b of the flexible display 230 moves in the -Y-axis direction in the first space 2101 of the first housing 210. Accordingly, in case that the electronic device 200 is switched from a slide-in state to a slide-out state, the end of the protective film 300, which is positioned in the first space 2101 of the first housing 210, may move in the -Y-axis direction with respect to the end of the flexible display 230, based on FIG. 9C. A part of the shape of the first adhesive member P1 may be deformed in the -Y-axis direction in a state of being bonded to the protective layer 231, based on the movement of the protective film 300. In addition, a part of the shape of the second adhesive member P2 may be deformed in the -Y-axis direction in a state of being bonded to the fixation plate 310, based on the movement of the protective film 300. Therefore, the change in relative position of one end of the protective film 300 and one end of the flexible display 230, which is based on the difference between the curvature radius of the bending section of the second portion 230b of the flexible display 230 and the curvature radius of the bending section of the protective film 300, may be allowed due to the first adhesive member P1 and the second adhesive member P2.

According to an embodiment, the first adhesive member P1 and the second adhesive member P2 may be formed to have the same adhesive force. In some embodiments, in order for the protective film 300 to be easily replaced, the first adhesive member P1 and the second adhesive member P2 may be configured to have different adhesive forces. For example, the second adhesive member P2 may be formed of a material having an adhesive force higher than the first adhesive member P1. In this case, the coupling force between the second attachment region 302 of the protective film 300 and the fixation plate 310 may be larger than the coupling force between the first attachment region 301 of the protective film 300 and the protective layer 231. Therefore, in case of replacing the protective film 300, after separating the fixation plate 310 from the electronic device 200, the protective film 300 may be peeled from the flexible display 230 in a state of gripping the fixation plate 310.

In an embodiment, referring to FIG. 9B and FIG. 9C, the protective film 300 may be a substantially flat surface in a region corresponding to the support bar 242. In an embodiment, the thickness of the first adhesive member P1 may be determined according to the gap between the protective layer 231 and the first attachment region 301. In addition, the thickness of the second adhesive member P2 may be determined according to the gap between the fixation plate 310 and the second attachment region 302. For example, in case that the gap between the protective layer 231 and the first attachment region 301 and the gap between the fixation plate 310 and the second attachment region 302 are the same, the thicknesses of the first adhesive member P1 and the second adhesive member P2 may be the same. Differently therefrom, in case that the gap between the protective layer 231 and the first attachment region 301 and the gap between the fixation plate 310 and the second attachment region 302 are different from each other, the thicknesses of the first adhesive member P1 and the second adhesive member P2 may be the same. Therefore, as the gap (e.g., the gap in the Z-axis direction based on FIG. 9C) between the first support part 2421 of the support bar 242 and the protective film 300 and the gap between the second support part 2422 and the protective film 300 become substantially the same through the first adhesive member P1 and second adhesive member P2, the protective film 300 may be a substantially flat surface in a region corresponding to the support bar 242.

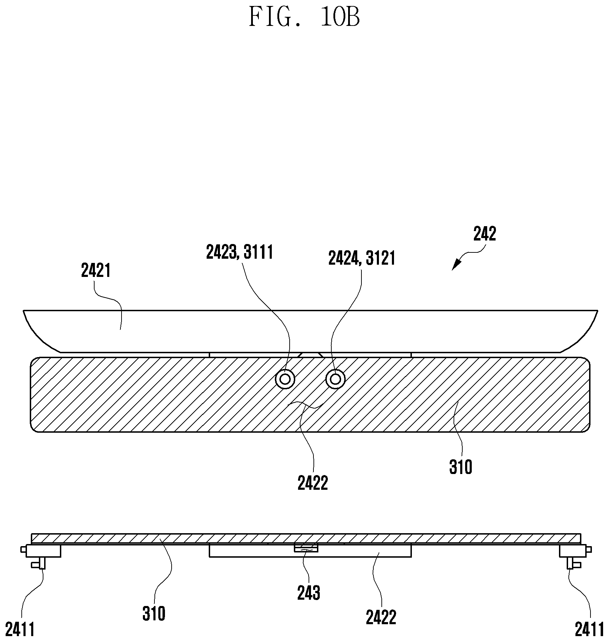

According to an embodiment, as illustrated in FIG. 10A to FIG. 10D, the second support part 2422 of the support bar 242 may be formed to have various sizes. In an embodiment, referring to FIGS. 10A and 10B, the second support part 2422 may be formed to have a width (e.g., the length in the X-axis direction based on FIG. 10A) smaller than the width of the first support part 2421. In addition, the second support part 2422 may be formed to have a width (e.g., the length in the X-axis direction based on FIG. 10A) smaller than the width of the fixation plate 310. In this case, as the space occupied by the second support part 2422 of the support bar 242 reduces in the first space 2101 of the first housing 210, a space, in which electronic components can be arranged, may be secured as much as the reduced corresponding space.

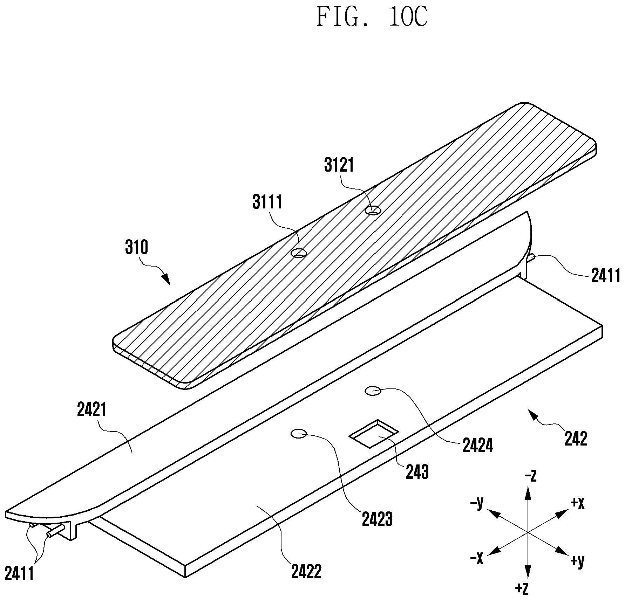

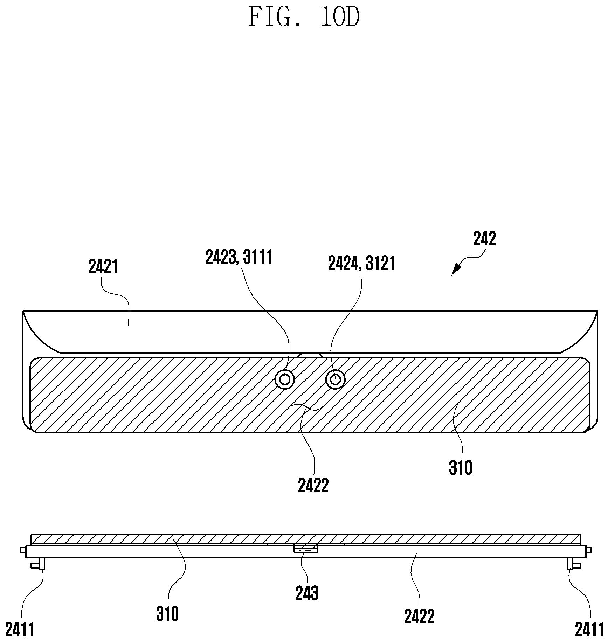

In an embodiment, referring to FIG. 10C and FIG. 10D, the second support part 2422 of the support bar 242 may be formed to have a size corresponding to the fixation plate 310. For example, the second support part 2422 may be formed to a size which enables the entire region of the fixation plate 310 to be seated on the second support part 2422. Therefore, compared to FIG. 10A, the fixation plate 310 may be stably coupled to the second support part 2422.

In an embodiment, referring to FIG. 10A to FIG. 10D, the fixation plate 310 may include a first fixation hole 3111 and a second fixation hole 3121 through which a fixation member extends. The fixation member may be a screw, a rivet, and/or a bolt and a nut, and will be described below under the assumption that the fixation member is a screw. The fixation plate 310 may be disposed in the second support part 2422 so that the first fixation hole 3111 and the second fixation hole 3121 correspond to a first fixation hole 2423 and a second fixation hole 2424 formed in the second support part 2422, respectively. In addition, the fixation plate 310 may cover the seat part 243 of a fixation belt formed on the second support part 2422. As a screw is sequentially inserted into the first fixation hole 3111 of the fixation plate 310 and the first fixation hole 2423 of the second support part 2422 and sequentially inserted into the second fixation hole 3121 of the fixation plate 310 and the second fixation hole 2424 of the second support part 2422, the fixation plate 310 may be fixed to the second support part 2422.

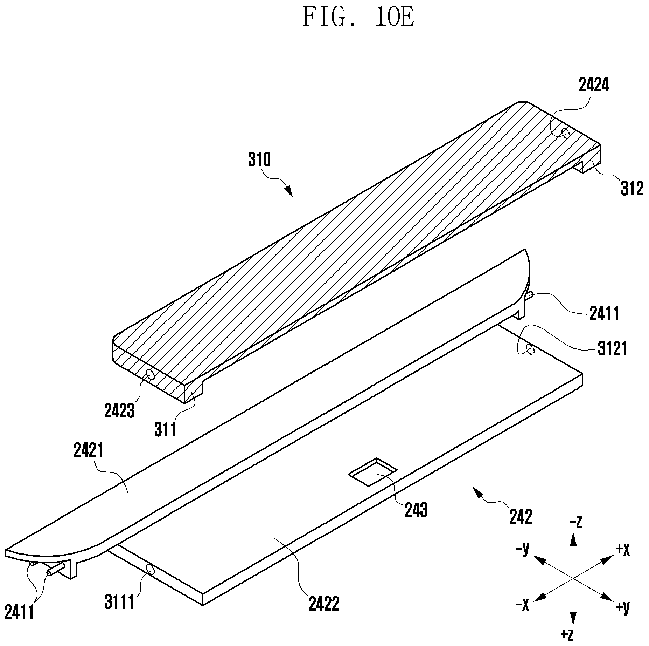

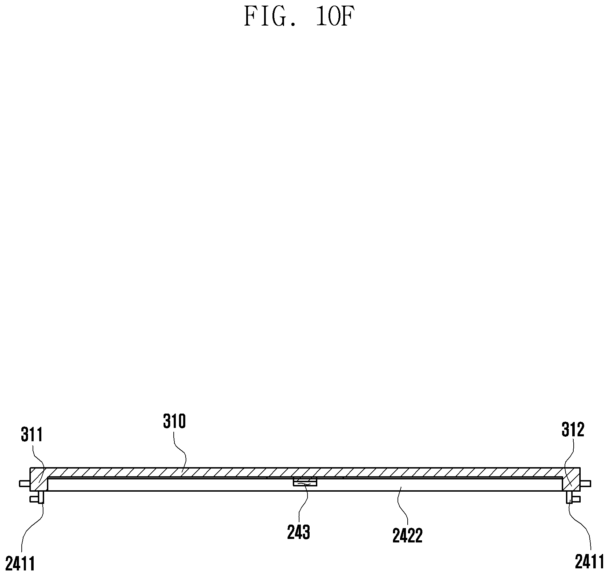

According to an embodiment, as illustrated in FIG. 10E and FIG. 10F, the fixation plate 310 may include a first slab part 311 which covers one side surface of the second support part 2422 and has the first fixation hole 3111 formed therein, and a second slab part 312 which covers the other side surface of the second support part 2422 and has the second fixation hole 3121 formed therein. In an embodiment, a screw may sequentially extend through the first fixation hole 3111 formed in the first slab part 311 and the first fixation hole 2421 formed on one side surface of the second support part 2422. In addition, a screw may sequentially extend through the second fixation hole 3121 formed in second slab part 312 and the second fixation hole 2424 formed on one side surface of the second support part 2422. Therefore, the fixation plate 310 may be fixed to the second support part 2422 by the screws.

According to an embodiment, as illustrated in FIG. 10E and FIG. 10F, in case that screws are inserted into the slab parts 311 and 312 positioned on the side surfaces of the fixation plate 310, compared to the case where a screw is inserted into one surface of the fixation plate 310 on which the second attachment region 302 of the protective film 300 is disposed as FIG. 10B and FIG. 10D, the attachment area of the second attachment region 302 with respect to the fixation plate 310 may be increased.

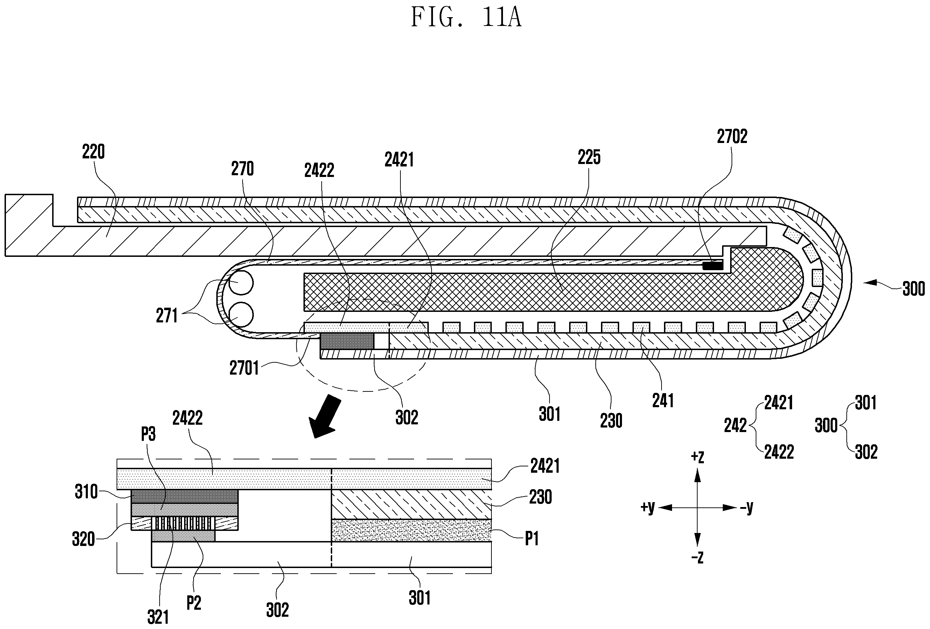

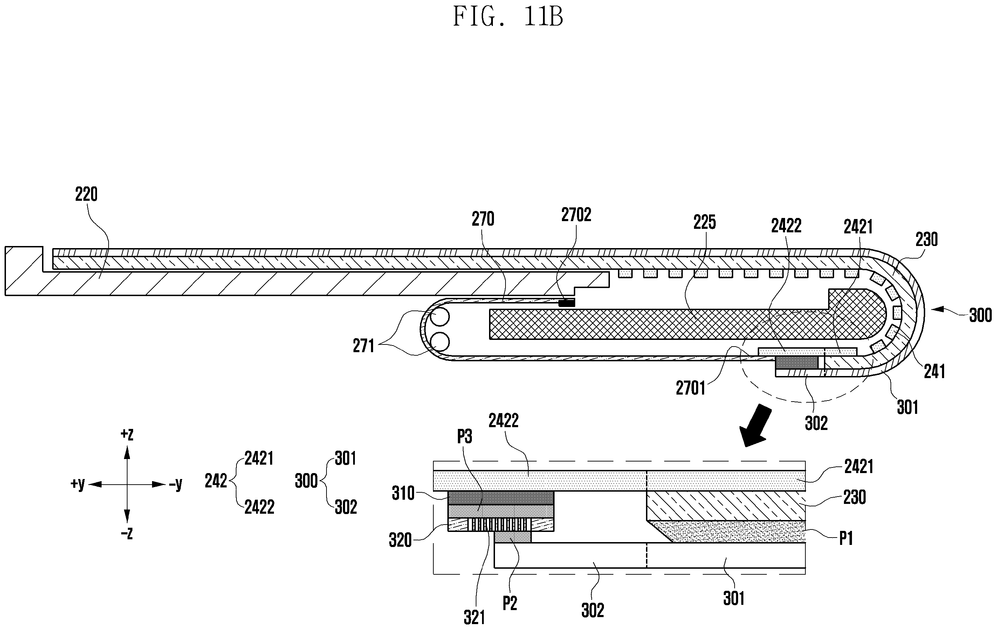

FIG. 11A and FIG. 11B are views showing a state in which a lattice plate 320 including a mesh structure 321 is disposed between the fixation plate 310 and the second attachment region 302 of the protective film 300 illustrated in FIG. 9A to FIG. 9C.

The following description relates to an embodiment in which a lattice plate 320 having a net structure (e.g., a mesh structure) formed therein is disposed between the second support part 2422 and the protective film 300 of the support bar 242 described in FIG. 8A and FIG. 8B, and an embodiment in which a lattice plate is disposed between the fixation plate 310 and the protective film 300 described in FIG. 9A and FIG. 9B. Hereinafter, descriptions about configurations, which are the same as or similar to the configurations described previously, will be omitted.

According to an embodiment, as illustrated in FIG. 11A and FIG. 11B, the lattice plate 320 may be disposed between the second support part 2422 of the support bar 242 and the second attachment region 302 of the protective film 300. In an embodiment, the lattice plate 320 may include a mesh structure 321 including a lattice pattern and/or a net pattern. In an embodiment, the lattice plate 320 may be disposed between the fixation plate 310 and the second attachment region 302 of the protective film 300. In an embodiment, the lattice plate 320 may be bonded to the fixation plate 310 by means of a third adhesive member P3. Hereinafter, the configuration will be described under the assumption that the lattice plate 320 is disposed on the fixation plate 310.

In an embodiment not illustrated in the drawings, the lattice plate 320 may be disposed on the second support part 2422 of the support bar 242 and be positioned between the second support part 2422 and the second attachment region 302 of the protective film 300. For example, as illustrated in FIG. 8A and FIG. 8B, in case that the fixation plate 310 is not disposed on the second support part 2422, the lattice plate 320 may be fixed to the second support part 2422 of the support bar 242 through various methods such as coupling by an adhesive member, coupling by a screw, coupling by a bolt and a nut, and coupling by a rivet.

In an embodiment, the first attachment region 301 of the protective film 300 may be bonded to the protective layer 231 by means of the first adhesive member P1, and the second attachment region 302 may be bonded to the lattice plate 320 by means of the second adhesive member P2. In an embodiment, the lattice plate 320 may be formed to have a size corresponding to the second attachment region 302 of the protective film 300. For example, the width of the lattice plate 320 may correspond to the width of the second attachment region 302. In an embodiment, the lattice plate 320 may be formed to have a size corresponding to the fixation plate 310.

In an embodiment, the lattice plate 320 may be formed of a material having surface roughness higher than the protective layer 231 of the flexible display 230. For example, the lattice plate 320 may be formed of a material, such as a metal (e.g., aluminum, stainless steel (STS, SUS), alloy of iron, magnesium, titanium, etc.) material or a non-metal (e.g., synthetic resin, ceramic, engineering plastic) material, having surface roughness higher than the surface roughness of the protective layer 231 of the flexible display 230. Therefore later, the protective film 300 may have an adhesive force larger than that of the protective layer 231 of the flexible display 230, with respect to the lattice plate 320.

In an embodiment, referring to FIG. 11A and FIG. 11B, the first attachment region 301 of the protective film 300 is bonded to the protective layer 231 by means of the first adhesive member P1, and the second attachment region 302 may be bonded to the lattice plate 320 by means of the second adhesive member P2. As described above, the lattice plate 320 may be formed of a material having surface roughness higher than the protective layer 231. In this case, the adhesive force between the lattice plate 320 and the second attachment region 302 by means of the second adhesive member P2 may be stronger than the adhesive force between the protective layer 231 and the first attachment region 301 by means of the first adhesive member P1. Therefore, compared to the case where the protective film 300 is attached only to the protective layer 231 as the second attachment region 302 is attached to the lattice plate 320 having surface roughness higher than the protective layer 231, the peeling of the protective film 300 from the flexible display 230 may be reduced or alleviated. Particularly, in case that the electronic device 200 is in a slide-out state, a part of the protective film 300 may be bent together with a part of the second portion 230b of the flexible display 230. Even if a repulsive force occurs in the bending section, the protective film 300 may not be peeled off from the flexible display 230 as the second attachment region 302 of the protective film 300 is fixed to the lattice plate 320.

In an embodiment, the mesh structure 321 formed on the lattice plate 320 may increase the coupling force between the lattice plate 320 and the protective film 300 by means of the second adhesive member P2. In an embodiment, at least a part of the second adhesive member P2 and at least a part of the third adhesive member P3 may be adsorbed to the mesh structure 321 of the lattice plate 320. In this case, compared to the case where the second adhesive member P2 is boned to a flat surface of the lattice plate 320 rather than the mesh structure 321, the adhesive force between the second adhesive member P2 and the lattice plate 320 may be increased. Likewise, compared to the case where the third adhesive member P3 is boned to a flat surface of the lattice plate 320 rather than the mesh structure 321, the adhesive force between the third adhesive member P3 and the lattice plate 320 may be increased.

Therefore, the coupling force between the lattice plate 320 and the protective film 300 by means of the second adhesive member may be increased. In addition, the coupling strength between the lattice plate 320 and the fixation plate 310 by means of the third adhesive member P3 may be increased.

In an embodiment, as described in FIG. 9B and FIG. 9C, since the protective film 300 is attached to the outermost layer (e.g., the protective layer 231) of the flexible display 230, the bending section of the protective film 300 may have a curvature radius larger than the bending section of the second portion 230b of the flexible display 230. Therefore, in case that the electronic device 200 is switched from a slide-in state to a slide-out state, the amount by which a portion of the protective film 300, which is positioned in the second portion 230b of the flexible display, moves in the -Y-axis direction in the first space 2101 may be larger than the amount by which the second portion 230b of the flexible display 230 moves in the -Y-axis direction in the first space 2101 of the first housing 210. Therefore, in case that the electronic device 200 is switched from a slide-in state to a slide-out state, the end of the protective film 300, which is positioned in the first space 2101 of the first housing 210, may move in the -Y-axis direction with respect to the end of the flexible display 230, based on FIG. 11B. A part of the shape of the first adhesive member P1 may be deformed in the -Y-axis direction in a state of being bonded to the protective layer 231, based on the movement of the protective film 300. In addition, a part of the shape of the second adhesive member P2 may be deformed in the -Y-axis direction in a state of being bonded to the lattice plate 320, based on the movement of the protective film 300. Meanwhile, the mesh structure 321 of the lattice plate 320 may be freely deformed. For example, in case that the electronic device 200 is switched from a slide-in state to a slide-out state, the mesh structure 321 may be configured such that the shape of the mesh structure 321 is deformed in the Y-axis direction together with the second adhesive member P2, based on the movement of the protective film 300. Therefore, the change in relative position of one end of the protective film 300 and one end of the flexible display 230, which is based on the difference between the curvature radius of the bending section of the second portion 230b of the flexible display 230 and the curvature radius of the bending section of the protective film 300, may be allowed due to deformation of the first adhesive member P1, deformation of the second adhesive member P2, and the mesh structure 321 of the lattice plate 320.

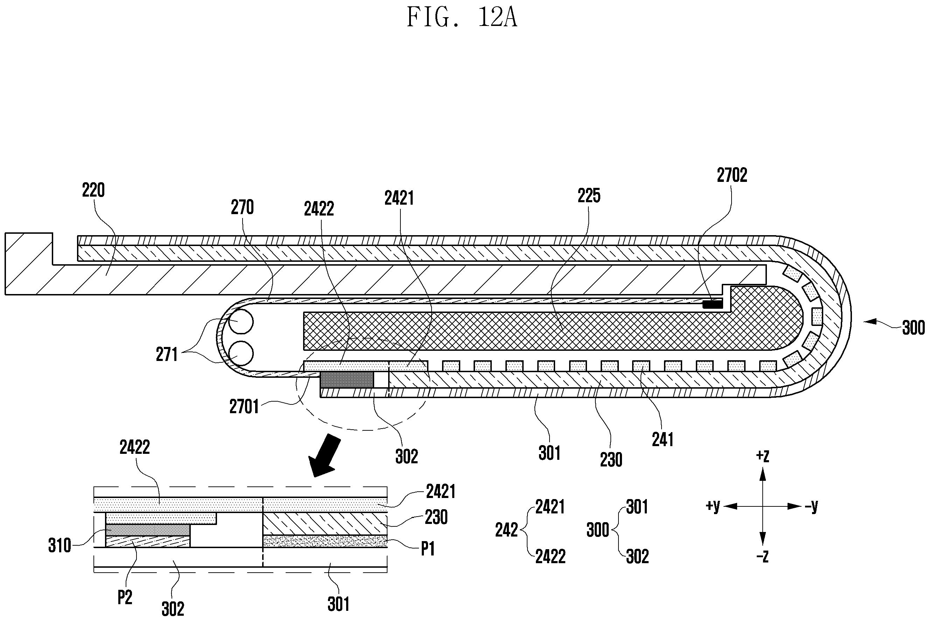

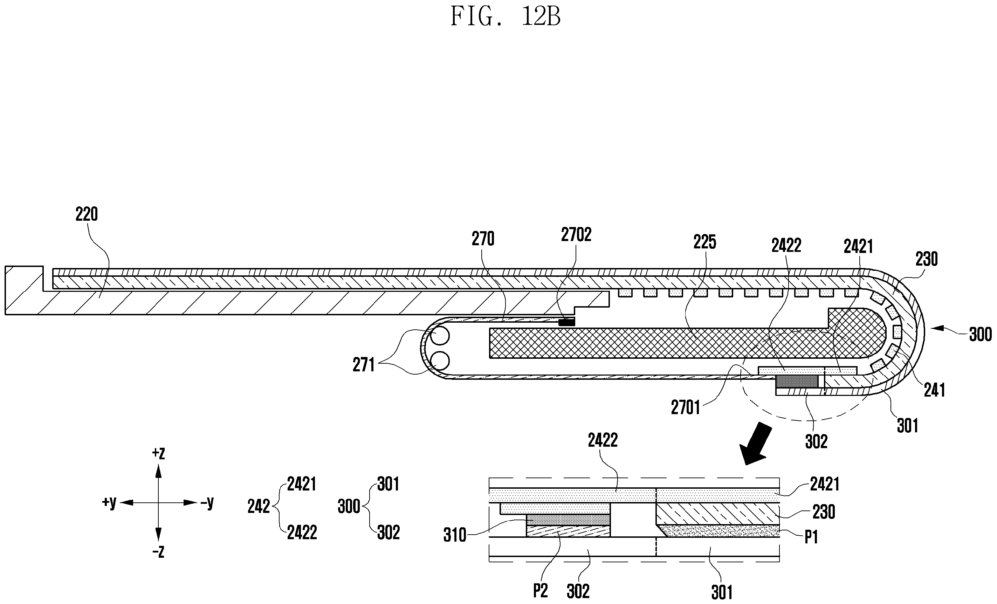

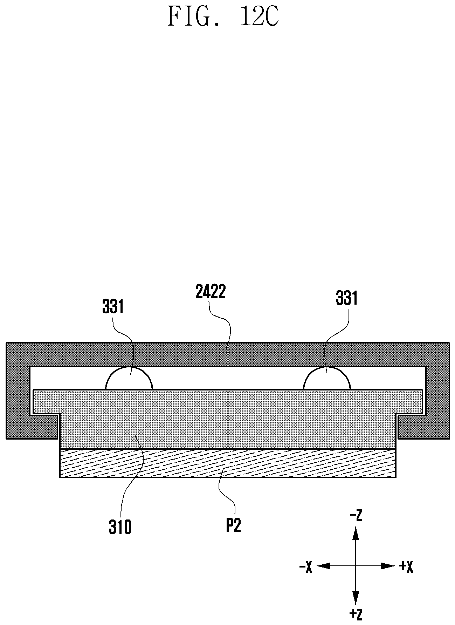

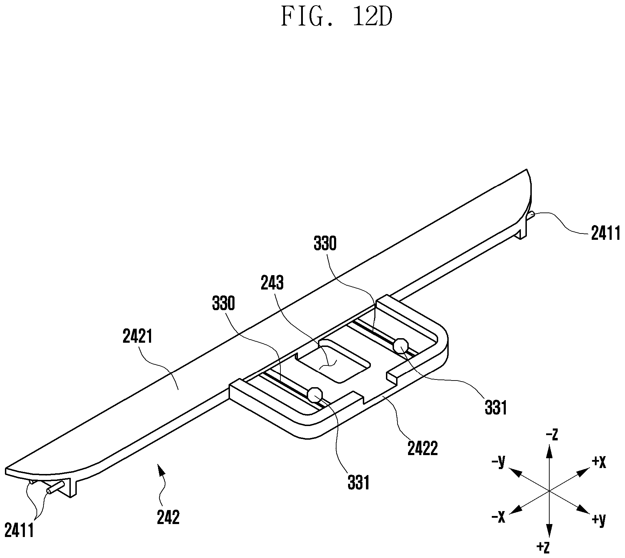

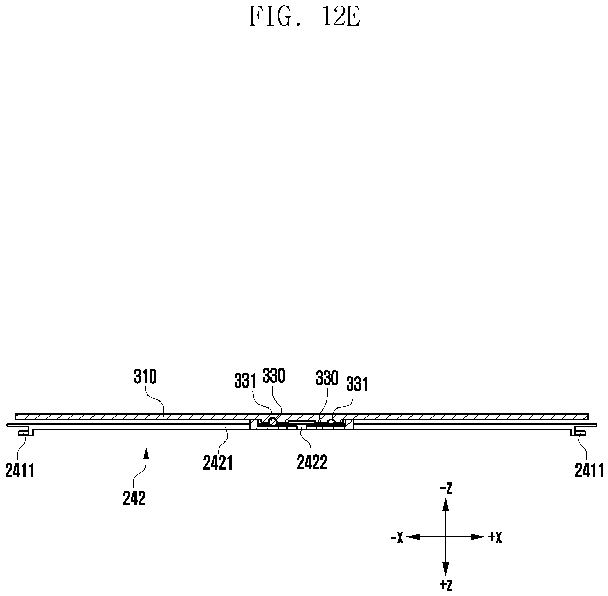

FIG. 12A and FIG. 12B are views showing a state in which a fixation plate 310 is slidably coupled to a second support part 2422 of a support bar 242 according to an embodiment of the disclosure. FIG. 12C is a view showing a connection relationship between the fixation plate 310 and the second support part 2422 in FIG. 12A. FIG. 12D and FIG. 12E are views showing a state in which a bearing ball 331 is disposed between a second support part 2422 of a support bar 242 and a fixation plate 310 according to an embodiment of the disclosure.

According to an embodiment, the fixation plate 310 may be movably coupled to the second support part 2422 of the support bar 242. For example, in a state where the protective film 300 is attached thereto, the fixation plate 310 may slide with respect to the second support part 2422 of the support bar 242 in the first space 2101 of the first housing 210, based on the sliding operation of the electronic device 200.

In an embodiment, in case that the electronic device 200 is switched from a slide-in state to a slide-out state, the second portion 230b of the flexible display 230, which is positioned in the first space 2101 of the first housing 210, may move in the -Y-axis direction based on FIG. 12A to have the second display area larger than the first display area. Meanwhile, as described above, since the protective film 300 is attached to the outermost layer (e.g., the protective layer 231) of the flexible display 230, the bending section of the protective film 300 may have a curvature radius larger than the bending section of the second portion 230b of the flexible display 230. Therefore, in case that the electronic device 200 is switched from a slide-in state to a slide-out state, the amount by which a portion of the protective film 300, which is positioned in the second portion 230b of the flexible display, moves in the -Y-axis direction in the first space 2101 may be larger than the amount by which the second portion 230b of the flexible display 230 moves in the -Y-axis direction in the first space 2101 of the first housing 210. Therefore, in case that the electronic device 200 is switched from a slide-in state to a slide-out state, the end of the protective film 300, which is positioned in the first space 2101 of the first housing 210, may move in the -Y-axis direction with respect to the end of the flexible display 230, based on FIG. 12B. A part of the shape of the first adhesive member P1 may be deformed in the -Y-axis direction in a state of being bonded to the protective layer 231, based on the movement of the protective film 300. In addition, a part of the shape of the second adhesive member P2 may be deformed in the -Y-axis direction in a state of being bonded to the fixation plate 310, based on the movement of the protective film 300. Meanwhile, in case that the electronic device 200 is switched from a slide-in state to a slide-out state, the fixation plate 310 may slide in the -Y-axis direction with respect to the second support part 2422 as much as the amount by which the protective film 300 moves with respect to the end of the flexible display 230. Therefore, the change in relative position of one end of the protective film 300 and one end of the flexible display 230, which is based on the difference between the curvature radius of the bending section of the second portion 230b of the flexible display 230 and the curvature radius of the bending section of the protective film 300, may be allowed due to deformation of the first adhesive member P1, deformation of the second adhesive member P2, and sliding of the fixation plate 310 with respect to the second support part 2422.

According to an embodiment, the fixation plate 310 may be coupled to the second support part 2422 so as to enable the fixation plate to slide with respect to the second support part 2422 in various manners. In an embodiment, referring to FIG. 12C, FIG. 12D, and FIG. 12E, a bearing ball 331 may be disposed between the fixation plate 310 and the second support part 2422 to guide sliding of the fixation plate 310 with respect to the second support part 2422. In one embodiment, a ball guide part 330, in which the bearing ball 331 is seated, may be formed on at least one of the second support part 2422 and the fixation plate 310. In an embodiment, referring to FIG. 12D, the second support part 2422 may have the ball guide part 330 which is formed thereon and in which the bearing ball 331 is seated. The ball guide part 330 may be formed in the sliding direction (e.g., the Y-axis direction based on FIG. 12B) of the fixation plate 310 with respect to the second support part 2422. In an embodiment, referring to FIG. 12E, the ball guide part 330 may be formed on a surface of the fixation plate 310, which faces the bearing ball 331. Therefore, the fixation plate 310 may move with respect to the second support part 2422 by means of the bearing ball 331, based on the relative movement of the protective film 300 with respect to the flexible display 230 according to a sliding operation of the electronic device 200.

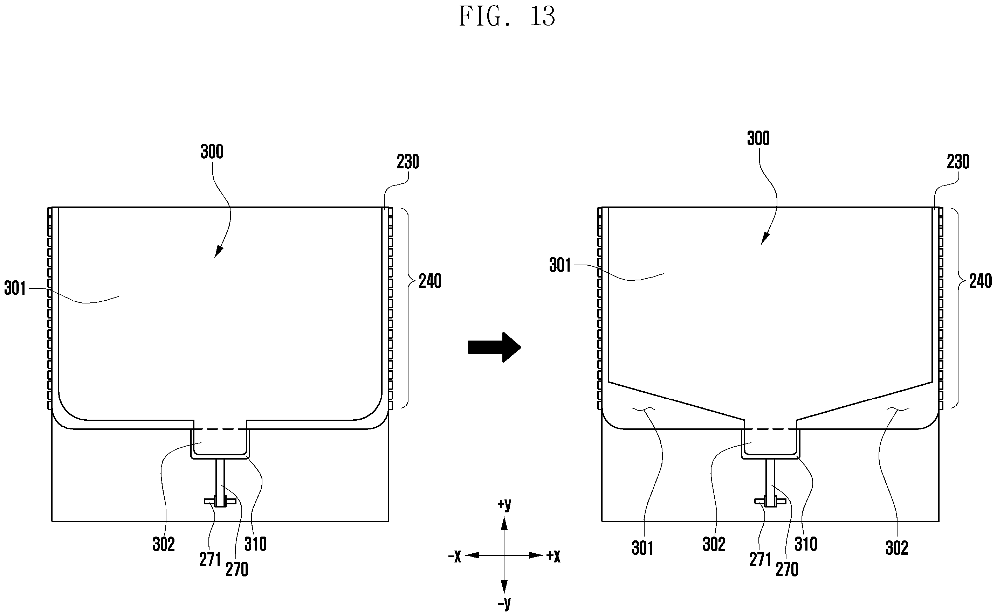

FIG. 13 is a view showing a state in which a region of a protective film 300, which is easily peeled off from the flexible display 230, has been removed according to an embodiment of the disclosure.

According to an embodiment, the fixation plate 310 may be formed to have a shape corresponding to the second support part 2422 of the support bar 242 illustrated in FIG. 10A. For example, the width (e.g., the length in the X-axis direction based on FIG. 10A) of the fixation plate 310 may be smaller than the width of the first support part 2421 of the support bar 242. In this case, as the space occupied by the second support part 2422 of the support bar 242 and the fixation plate 310 reduces in the first space 2101 of the first housing, a space, in which electronic components are arranged, may be secured as much as the reduced corresponding space.

In an embodiment, referring to FIG. 13, the second attachment region 302 of the protective film 300 may be formed to correspond to the size of the fixation plate 310. In this case, the width (e.g., the length in the X-axis direction based on FIG. 13) of the second attachment region 302 of the protective film 300 illustrated in FIG. 13 may be smaller than the width (e.g., the length in the X-axis direction based on FIG. 9A) of the second attachment region 302 of the protective film 300 illustrated in FIG. 9A. Compared to the protective film 300 illustrated in FIG. 9A, in case of the protective film 300 illustrated in FIG. 13, an area, in which the second attachment region 302 is bonded to the fixation plate 310, may be reduced. Therefore, one region (e.g., the end of the protective film 300, which is positioned at the end of the flexible display 230) of the protective film 300 may be peeled off from the flexible display 230 due to the repulsion force generated in the bending section of the protective film 300, which is bent together with the second portion 230b of the flexible display 230. In order to alleviate the phenomenon, as illustrated in FIG. 13, a first region 303 and a second region 304 of the protective film 300, which can be peeled off from the flexible display 230, may be removed therefrom. In an embodiment, the first region 303 and the second region 304 may be regions in which stress by a repulsive force generated in the bending section of the protective film 300 is concentrated. Therefore, the phenomenon, in which the protective film 300 is peeled off from the flexible display 230 as the width of the second attachment region 302 of the protective film 300 decreases, may be alleviated.

An electronic device according to an embodiment of the disclosure may include a first housing 210, a second housing 220 movably coupled to the first housing, a flexible display 230 which is disposed in the first housing and the second housing and includes an inner region 230b (e.g., the second portion 230b of the flexible display 230 in FIG. 3A) having at least a part moving in an inner space of the electronic device, based on the movement of the second housing with respect to the first housing, a support bar 242 including a first support part 2421 configured to support the end of the flexible display, which is positioned in the inner space 2101 (e.g., the first space 2101 in FIG. 3A) of the electronic device, and a second support part 2422 which extends from the first support part and is adj acent to the end of the flexible display, and a protective film 300 including a first attachment region 301 bonded to the flexible display and a second attachment region 302 which extends from the first attachment region and has at least a part facing the second support part.

In addition, the second attachment region 302 of the protective film 300 may be bonded to the second support part of the support bar 2422.

In addition, a lattice plate 320, which includes a mesh structure 321 and is disposed on the second support part of the support bar to be bonded to the second attachment region of the protective film, may be further included therein.

In addition, a fixation plate 310, which has at least a part disposed on the second support part of the support bar and to which the second attachment region of the protective film is bonded, may be further included therein.

In addition, the first attachment region and the second attachment region of the protective film may be flat surfaces in a region corresponding to the support bar.

In addition, the second support part 2422 of the support bar 242 may be formed to have a size corresponding to the fixation plate 310.

In addition, a drive belt 270, which has one end 2701 disposed between the second support part and the fixation plate and fixed to one of the second support part or the fixation plate and is wound around a rotation roller 271 disposed in one of the first housing or the second housing, may be further included therein.

In addition, a first adhesive member P1 disposed between the flexible display and the first attachment region of the protective film and a second adhesive member P2 disposed between the fixation plate and the second attachment region of the protective film may be further included therein.

In addition, the second adhesive member may be formed of a material having an adhesive force higher than the adhesive force of the first adhesive member.

In addition, a lattice plate 320, which includes a mesh structure 321 and is disposed on the fixation plate to be bonded to the second attachment region of the protective film, may be further included therein.

In addition, a first adhesive member P1 disposed between the flexible display and the first attachment region of the protective film and a second adhesive member P2 disposed between the lattice plate and the second attachment region of the protective film may be further included therein.

In addition, the fixation plate may be movably coupled to the second support part of the support bar and be configured to be move with respect to the support bar, based on the movement of the second housing with respect to the first housing.

In addition, a bearing ball 331 disposed between the fixation plate and the second support part may be further included therein.

In addition, at least one of the second support part and the fixation plate may have a ball guide part 330 formed thereon, in which the bearing ball is seated.

In addition, the fixation plate may include a first slab part 311 which is configured to cover a side surface of the second support part and has a first fixation hole 3111 formed therein, and a second slab part 312 which is configured cover the other side surface of the second support part and has a second fixation hole 3121 formed therein, and the fixation plate may be coupled to the second support part through a fixation member inserted into the first fixation hole and the second fixation hole.

In addition, the protective film may be attached to a protective layer 231 positioned on the outermost portion of the flexible display.

In addition, the protective film may be formed to have a length (e.g., the length in the Y-axis direction in FIG. 8A) in a first direction, which is longer than the length in the first direction of the flexible display.

In addition, the fixation plate may be formed to have a width corresponding to the width (e.g., the length in the X-axis direction in FIG. 9A) of the second attachment region of the protective film.

In addition, the support bar may have a roughness higher than a protective layer of the flexible display.

In addition, the fixation plate may have a roughness higher than a protective layer of the flexible display.

## Claims

1. An electronic device (101, 200) comprising:
a first housing (210);
a second housing (220) movably coupled with respect to the first housing ;
a flexible display (230) which is disposed in the first housing and the second housing and comprises an inner region (230b) having at least a part moving in an inner space of the electronic device, based on the movement of the second housing with respect to the first housing ;
a support bar (242) comprising a first support part (2421) configured to support the end of the flexible display , which is positioned in an inner space (2101) of the electronic device, and a second support part (2422) which extends from the first support part and is adjacent to the end of the flexible display ; and
a protective film (300) comprising a first attachment region (301) bonded to the flexible display and a second attachment region (302) which extends from the first attachment region and has at least a part facing the second support part .

2. The electronic device of claim 1, wherein the first attachment region of the protective film is attached to a protective layer (231) positioned on the outermost portion of the flexible display, and,
wherein the second attachment region of the protective film is bonded to the second support part of the support bar.

3. The electronic device of claim 1 or 2, further comprising a lattice plate (320) which comprises a mesh structure (321) and is disposed on the second support part of the support bar (242) to be bonded to the second attachment region of the protective film.

4. The electronic device of claim 1 or 2, further comprising a fixation plate (310) which has at least a part disposed on the second support part of the support bar and to which the second attachment region of the protective film is bonded.

5. The electronic device of claim 1 or 4, wherein the first attachment region and the second attachment region of the protective film are flat surfaces in a region corresponding to the support bar.

6. The electronic device of claim 4, wherein the second support part of the support bar is formed to have a size corresponding to the fixation plate; and
the fixation plate is formed to have a width corresponding to the width of the second attachment region of the protective film .

7. The electronic device of claim 4 or 6, further comprising a drive belt (270) which has one end (2701) disposed between the second support part and the fixation plate and fixed to one of the second support part or the fixation plate, and is wound around a rotation roller(271) disposed in one of the first housing or the second housing.

8. The electronic device of claim 4 or 6, further comprising:
a first adhesive member (P1) disposed between the flexible display and the first attachment region of the protective film ; and
a second adhesive member (P2) disposed between the fixation plate (310) and the second attachment region of the protective film .

9. The electronic device of claim 8, wherein the second adhesive member is formed of a material having an adhesive force higher than the adhesive force of the first adhesive member.

10. The electronic device of claim 4 or any one of claims 6 to 9, further comprising a lattice plate (320) which comprises a mesh structure (321) and is disposed on the fixation plate to be bonded to the second attachment region of the protective film .

11. The electronic device of claim 10, further comprising:
a first adhesive member (P1) disposed between the flexible display and the first attachment region of the protective film ; and
a second adhesive member (P2) disposed between the lattice plate and the second attachment region of the protective film .

12. The electronic device of claim 4 or any one of claims 6 to 11, wherein the fixation plate is movably coupled to the second support part of the support bar and is configured to move with respect to the support bar, based on the movement of the second housing with respect to the first housing .

13. The electronic device of claim 12, further comprising a bearing ball (331) disposed between the fixation plate and the second support part , wherein at least one of the second support part and the fixation plate preferably has a ball guide part (330) formed thereon, in which the bearing ball is seated.

14. The electronic device of claim 4 or any one of claims 6 to 13, wherein the fixation plate (310):
comprises a first slab part (311) which is configured to cover a side surface of the second support part and has a first fixation hole (3111) formed therein, and a second slab part (312) which is configured to cover the other side surface of the second support part and has a second fixation hole (3121) formed therein; and
is coupled to the second support part through a fixation member inserted into the first fixation hole and the second fixation hole.

15. The electronic device of claim 1, wherein the protective film is formed to have a length in a first direction, which is longer than the length in the first direction of the flexible display .
